# EUROPEAN PATENT APPLICATION

(11) **EP 4 280 518 A1**
(43) Date of publication of application: **22.11.2023**
(21) Application number: 22739192.7
(22) Date of filing: 18.01.2022
(51) Int. Cl.: H04L 5/00

(54) **INFORMATION PROCESSING METHOD AND APPARATUS, TERMINAL, AND NETWORK DEVICE**

(30) Priority: 18.01.2021 CN 202110065070
(71) Applicant: Datang Mobile Communications Equipment Co., Ltd., Beijing 100085 (CN)
(72) Inventor: HUANG, Qiuping, Beijing 100085 (CN); SU, Xin, Beijing 100085 (CN); GAO, Qiubin, Beijing 100085 (CN)
(74) Representative: Studio Torta S.p.A.
(86) International application number: PCT/CN2022/072586
(87) International publication number: WO 2022/152317

(57) **Abstract**

The present disclosure discloses an information processing method and device, a terminal and a network device. The method includes: receiving transmission mode-related configuration information; determining whether a transmission scheme of a first signal is a first transmission scheme according to the transmission mode-related configuration information; wherein, the transmission mode-related configuration information includes at least one of: transmission mode configuration information, DMRS port indication information of the first signal, TDRA indication information about the first signal, or scenario indication information about whether a terminal is in a high-speed train scenario and/or a frequency pre-compensation scenario; in the first transmission scheme, one layer of the first signal and at least two reference signals have a QCL relationship with respect to at least one large-scale parameter of channel; and/or, one DMRS port of the first signal and at least two reference signals have the QCL relationship with respect to at least one large-scale parameter of channel.

## Description

### CROSS-REFERENCE TO RELATED APPLICATION

This application claims priorities of the Chinese patent application No. 202110065070.5 filed on January 18, 2021, which are incorporated herein by reference in their entireties.

### TECHNICAL FIELD

The present disclosure relates to the field of communication technology, in particular to an information processing method, a device, a terminal and a network device.

### BACKGROUND

The 5G New Radio (NR) system supports the basic transmission scheme of the Physical Downlink Shared Channel (PDSCH) and a variety of multiple transmission/reception point (multiple TRP, multi-TRP) transmission schemes. Currently, the following multi-TRP transmission schemes are planned to be added:

Space Division Multiplex (SDM) scheme 1c: a data layer and/or DMRS port of PDSCH and multiple reference signals have a quasi-co-location (QCL) relationship with respect to at least one large-scale parameter of channel.

However, currently there is no way to distinguish the above newly added transmission scheme from other transmission schemes, resulting in the inability to accurately determine a specific transmission scheme when there are multiple Multi-TRP transmission schemes in the system.

### SUMMARY

The present disclosure aims to provide an information processing method, device, a terminal and a network device, so as to solve the problem in the related art that a specific transmission scheme cannot be accurately determined when there are multiple Multi-TRP transmission schemes in the system.

In order to solve the above technical problem, an embodiment of the present disclosure provides an information processing method, including: receiving transmission mode-related configuration information; determining whether a transmission scheme of a first signal is a first transmission scheme according to the transmission mode-related configuration information; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one data layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

Optionally, the determining whether a transmission scheme of a first signal is a first transmission scheme according to the transmission mode-related configuration information includes: determining a number of a code division multiplexing (CDM) group where the DMRS port of the first signal is located and/or QCL indication information of the DMRS port of the first signal according to the DMRS port indication information; determining whether the transmission scheme of the first signal is the first transmission scheme according to the number and/or the QCL indication information.

Optionally, the determining whether the transmission scheme of the first signal is the first transmission scheme according to the QCL indication information includes: determining QCL type information and/or number information of a transmission configuration indication (TCI) state according to the QCL indication information; determining whether the transmission scheme of the first signal is the first transmission scheme according to the QCL type information and/or the number information of the TCI state.

Optionally, the determining whether the transmission scheme of the first signal is the first transmission scheme according to the number and/or the QCL indication information includes: determining that the transmission scheme of the first signal is the first transmission scheme in case that a first condition is satisfied; wherein, the first condition includes: a TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.

Optionally, the determining whether the transmission scheme of the first signal is the first transmission scheme according to the transmission mode-related configuration information includes: determining that the transmission scheme of the first signal is the first transmission scheme in case that a second condition is satisfied; wherein, the second condition includes that the transmission mode configuration information indicates a value corresponding to the first transmission scheme.

Optionally, the DMRS port indication information includes the QCL indication information of the DMRS port of the first signal; the second condition further includes: the QCL indication information indicates that the first signal is associated with at least two TCI states, and/or the QCL indication information indicates that the DMRS port of the first signal is associated with at least two TCI states.

Optionally, the second condition further includes: the number of the CDM group where the DMRS port of the first signal is located is 1.

Optionally, the determining whether the transmission scheme of the first signal is the first transmission scheme according to the transmission mode-related configuration information includes: determining that the transmission scheme of the first signal is the first transmission scheme in case that a third condition is satisfied; wherein, the third condition includes the following: the QCL indication information indicates that the first signal is associated with at least one TCI state that meets a fourth condition; and/or the QCL indication information indicates the DMRS port of the first signal is associated with at least one TCI state that meets the fourth condition; the fourth condition includes: the number of QCL types associated with at least two reference signals is at least one.

Optionally, the third condition further includes: the TDRA field of the DCI that schedules the first signal does not indicate the parameter corresponding to the second transmission scheme; wherein, the second transmission scheme is different from the first transmission scheme.

Optionally, the determining whether the transmission scheme of the first signal is the first transmission scheme according to the QCL type information includes: determining that the transmission scheme of the first signal is the first transmission scheme in case that a fifth condition is satisfied; wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state of the at least two TCI states is a first type, and a QCL type included in one TCI state is a second type; channel large-scale parameter included in the first type are large-scale parameter of channel on a delay property; the second type includes the large-scale parameter of channel on a delay property and large-scale parameter of channel on a frequency property.

Optionally, determining whether the transmission scheme of the first signal is the first transmission scheme according to the QCL type information includes: determining that the transmission scheme of the first signal is the first transmission scheme in case that a sixth condition is satisfied; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state of the at least two TCI states is a first type, and a QCL type included in one TCI state is a third type; large-scale parameter of channel included in the first type are all delay characteristic parameters; large-scale parameter of channel included in the third type are all frequency characteristic parameters.

Optionally, the information processing method further includes: determine a frequency of a downlink signal according to a reference signal corresponding to a QCL type indicated in the TCI state and including the large-scale parameter of channel on a frequency property; and/or, determining a transmission frequency of an uplink signal according to a reference signal indicated in the TCI state and corresponding to the QCL type including the large-scale parameter of channel on a frequency property.

Optionally, the determining whether the transmission scheme of the first signal is the first transmission scheme according to the QCL type information includes: determining that the transmission scheme of the first signal is the first transmission scheme in case that a seventh condition is satisfied; wherein, the seventh condition includes: determining a reference signal that has a QCL relationship with the DMRS port with respect to large-scale parameter of channel on a frequency property according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: a QCL type included in each of the two TCI states is of the second type; the second type includes large-scale parameter of channel on a delay property and large-scale parameter of channel on a frequency property.

Optionally, the determining the reference signal that has a QCL relationship with the DMRS port and the large-scale parameter with respect to large-scale parameter of channel on a frequency property according to the first rule includes: determining a target TCI state according to first indication information sent by a network device; wherein a reference signal corresponding to a QCL relationship of large-scale parameter of channel on a frequency property included in the target TCI state is used as the reference signal having the QCL relationship with the DMRS port with respect to the large-scale parameter of channel on a frequency property.

Optionally, the transmission mode-related configuration information instructs the terminal to determine the reference signal having a QCL relationship with the DMRS port with respect to the large-scale parameter of channel on a frequency property according to a first rule; the determining the reference signal having a QCL relationship with the DMRS port with respect to the large-scale parameter of channel on a frequency property according to the first rule includes: determining the target TCI state; using the reference signal corresponding to the QCL type including the large-scale parameter of channel on a frequency property in the target TCI state as a reference signal having a QCL relationship with the DMRS port with respect to the large-scale parameter of channel on a frequency property, the large-scale parameter of channel on a frequency property include { Doppler shift, Doppler spread}.

Optionally, the transmission mode-related configuration information instructs the terminal to determine a reference signal having a QCL relationship with the DMRS port with respect to large-scale parameter of channel on a frequency property according to a first rule; the determining the reference signal having a QCL relationship with the DMRS port with respect to the large-scale parameter of channel on a frequency property according to the first rule includes: ignoring the following large-scale parameter of channel in the first TCI state: { Doppler shift, Doppler spread}.

Optionally, the DMRS port indication information includes QCL indication information of the DMRS port of the first signal; the determining whether the transmission scheme of the first signal is the first transmission scheme according to the transmission mode-related configuration information includes: determining that the transmission scheme of the first signal is the first transmission scheme in case that an eighth condition is satisfied; wherein the eighth condition includes: the scenario indication information indicates that the terminal is in a high-speed train scenario and/or a frequency pre-compensation scenario, and the QCL indication information indicates that the DMRS port of the first signal is associated with at least two TCI states.

Optionally, the information processing method further includes: determining a frequency of a downlink signal according to a reference signal used to determine a transmission frequency of an uplink signal.

Optionally, the information processing method further includes: determining a frequency of a downlink signal according to the reference signal having a QCL relationship with the DMRS port of the first signal with respect to the large-scale parameter of channel on a frequency property; and/or, determining a transmission frequency of an uplink signal according to the reference signal having a QCL relationship with the DMRS port of the first signal with respect to the large-scale parameter of channel on a frequency property.

Optionally, the information processing method further includes: determining that the transmission scheme of the first signal is a third transmission scheme in case that a ninth condition is satisfied; wherein the ninth condition includes: a TDRA field of the DCI for scheduling the first signal does not indicate a parameter corresponding to a second transmission scheme; the transmission mode configuration information is not configured as a value corresponding to the first transmission scheme; a number of CDM groups where the DMRS port of the first signal is located is 2; and, as follows: the first signal is associated with 2 TCI states; and/or the DMRS port of the first signal is associated with 2 TCI states; and/or the third transmission scheme, the second transmission scheme and the first transmission schemes are different from each other.

An embodiment of the present disclosure provides an information processing method, including: sending transmission mode-related configuration information to indicate whether a transmission scheme of a first signal is a first transmission scheme; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

Optionally, the sending transmission mode-related configuration information to indicate whether a transmission scheme of a first signal is a first transmission scheme comprises: indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme.

Optionally, indicating QCL indication information through the DMRS port indication information, to indicate whether the transmission scheme of the first signal is the first transmission scheme, comprises: indicating QCL type information through the QCL indication information, and/or number information of the transmission configuration indication (TCI) state, to indicate whether the transmission scheme of the first signal is the first transmission scheme.

Optionally, the indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme includes: indicating information that met a first condition, to indicate that the transmission scheme of the first signal is the first transmission scheme; wherein, the first condition includes: a TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.

Optionally, the sending transmission mode-related configuration information to indicate whether the transmission scheme of the first signal is the first transmission scheme comprises: indicating information that met a second condition, to indicate that the transmission scheme of the first signal is the first transmission scheme; wherein, the second condition includes that the transmission mode configuration information indicates a value corresponding to the first transmission scheme.

Optionally, the DMRS port indication information includes the QCL indication information of the DMRS port of the first signal; the second condition further includes: the QCL indication information indicates that the first signal is associated with at least two TCI states, and/or the QCL indication information indicates that the DMRS port of the first signal is associated with at least two TCI states.

Optionally, the second condition further includes: the number of the CDM group where the DMRS port of the first signal is located is 1.

Optionally, the sending transmission mode-related configuration information to indicate whether the transmission scheme of the first signal is the first transmission scheme comprises: indicating information that met a third condition through the DMRS port indication information, to indicate that the transmission scheme of the first signal is the first transmission scheme; wherein, the third condition includes the following: the QCL indication information indicates that the first signal is associated with at least one TCI state that meets a fourth condition; and/or the QCL indication information indicates the DMRS port of the first signal is associated with at least one TCI state that meets the fourth condition; the fourth condition includes: the number of QCL types associated with at least two reference signals is at least one.

Optionally, the third condition further includes: the TDRA field of the DCI that schedules the first signal does not indicate the parameter corresponding to the second transmission scheme; wherein, the second transmission scheme is different from the first transmission scheme.

Optionally, indicating QCL type information through the QCL indication information, to indicate whether the transmission scheme of the first signal is the first transmission scheme, comprises: indicating information that met a fifth condition through the QCL indication information, to indicate that the transmission scheme of the first signal is the first transmission scheme; wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state of the at least two TCI states is a first type, and a QCL type included in one TCI state is a second type; large-scale parameter of channel included in the first type are large-scale parameter of channel on a delay property; the second type includes the large-scale parameter of channel on a delay property and large-scale parameter of channel on a frequency property.

Optionally, indicating QCL type information through the QCL indication information, to indicate whether the transmission scheme of the first signal is the first transmission scheme, comprises: indicating information that met a sixth condition through the QCL indication information, to indicate that the transmission scheme of the first signal is the first transmission scheme; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state of the at least two TCI states is a first type, and a QCL type included in one TCI state is a third type; large-scale parameter of channel included in the first type are all delay characteristic parameters; large-scale parameter of channel included in the third type are all frequency characteristic parameters.

Optionally, the information processing method further includes: indicating a reference signal corresponding to the QCL type including the large-scale parameter of channel on a frequency property through the TCI state.

Optionally, indicating QCL type information through the QCL indication information, to indicate whether the transmission scheme of the first signal is the first transmission scheme, comprises: indicating information that met a seventh condition through the QCL indication information, to indicate that the transmission scheme of the first signal is the first transmission scheme; wherein, the seventh condition includes: determining a reference signal that has a QCL relationship with the DMRS port with respect to large-scale parameter of channel on a frequency property according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: a QCL type included in each of the two TCI states is of the second type; the second type includes large-scale parameter of channel on a delay property and large-scale parameter of channel on a frequency property.

Optionally, the information processing method further includes: sending first indication information for indicating a target TCI state; wherein a reference signal corresponding to a QCL relationship of large-scale parameter of channel on a frequency property included in the target TCI state is used as the reference signal having the QCL relationship with the DMRS port with respect to the large-scale parameter of channel on a frequency property.

Optionally, the sending transmission mode-related configuration information to indicate whether the transmission scheme of the first signal is the first transmission scheme comprises: instructing the terminal to determine the reference signal having a QCL relationship with the DMRS port with respect to the large-scale parameter of channel on a frequency property according to a first rule through the transmission mode-related configuration information; the determining the reference signal having a QCL relationship with the DMRS port with respect to the large-scale parameter of channel on a frequency property according to the first rule includes: determining the target TCI state; using the reference signal corresponding to the QCL type including the large-scale parameter of channel on a frequency property in the target TCI state as a reference signal having a QCL relationship with the DMRS port with respect to the large-scale parameter of channel on a frequency property, the large-scale parameter of channel on a frequency property include { Doppler shift, Doppler spread}.

Optionally, the sending transmission mode-related configuration information to indicate whether the transmission scheme of the first signal is the first transmission scheme comprises: instructing the terminal to determine a reference signal having a QCL relationship with the DMRS port with respect to large-scale parameter of channel on a frequency property according to a first rule through the transmission mode-related configuration information; the determining the reference signal having a QCL relationship with the DMRS port with respect to the large-scale parameter of channel on a frequency property according to the first rule includes: ignoring the following large-scale parameter of channel in the first TCI state: {Doppler shift, Doppler spread}.

Optionally, the DMRS port indication information includes QCL indication information of the DMRS port of the first signal; the sending transmission mode-related configuration information to indicate whether the transmission scheme of the first signal is the first transmission scheme includes: indicating information that met an eighth condition through the transmission mode-related configuration information to indicate that the transmission scheme of the first signal is the first transmission scheme; wherein the eighth condition includes: the scenario indication information indicates that the terminal is in a high-speed train scenario and/or a frequency pre-compensation scenario, and the QCL indication information indicates that the DMRS port of the first signal is associated with at least two TCI states.

Optionally, the information processing method further includes: indicating a reference signal used to determine a transmission frequency of an uplink signal.

Optionally, the information processing method further includes: indicating a reference signal having a QCL relationship with the DMRS port of the first signal with respect to the large-scale parameter of channel on a frequency property.

Optionally, the information processing method further includes: indicating information that met a ninth condition through the transmission mode-related configuration information to indicate that the transmission scheme of the first signal is the third transmission scheme; wherein the ninth condition includes: a TDRA field of the DCI for scheduling the first signal does not indicate a parameter corresponding to a second transmission scheme; the transmission mode configuration information is not configured as a value corresponding to the first transmission scheme; a number of CDM groups where the DMRS port of the first signal is located is 2; and, as follows: the first signal is associated with 2 TCI states; and/or the DMRS port of the first signal is associated with 2 TCI states; and/or the third transmission scheme, the second transmission scheme and the first transmission schemes are different from each other.

An embodiment of the present disclosure provides a terminal, including a memory, a transceiver, and a processor, wherein the memory is used to store computer programs; the transceiver is used to send and receive data under the control of the processor; the processor is used to read the computer programs in the memory and perform the following operations: receiving transmission mode-related configuration information through the transceiver; determining whether a transmission scheme of a first signal is a first transmission scheme according to the transmission mode-related configuration information; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

Optionally, wherein the determining whether a transmission scheme of a first signal is a first transmission scheme according to the transmission mode-related configuration information includes: determining a number of a code division multiplexing (CDM) group where the DMRS port of the first signal is located and/or QCL indication information of the DMRS port of the first signal according to the DMRS port indication information; determining whether the transmission scheme of the first signal is the first transmission scheme according to the number and/or the QCL indication information.

Optionally, the determining whether the transmission scheme of the first signal is the first transmission scheme according to the QCL indication information includes: determining QCL type information and/or number information of a transmission configuration indication (TCI) state according to the QCL indication information; determining whether the transmission scheme of the first signal is the first transmission scheme according to the QCL type information and/or the number information of the TCI state.

An embodiment of the present disclosure provides a network device, including a memory, a transceiver, and a processor, wherein the memory is used to store computer programs; the transceiver is used to send and receive data under the control of the processor; the processor is used to read the computer programs in the memory and perform the following operations: sending transmission mode-related configuration information through the transceiver to indicate whether a transmission scheme of a first signal is a first transmission scheme; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

Optionally, the sending transmission mode-related configuration information to indicate whether a transmission scheme of a first signal is a first transmission scheme comprises: indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme.

Optionally, indicating QCL indication information through the DMRS port indication information, to indicate whether the transmission scheme of the first signal is the first transmission scheme, comprises: indicating QCL type information through the QCL indication information, and/or number information of the transmission configuration indication (TCI) state, to indicate whether the transmission scheme of the first signal is the first transmission scheme.

An embodiment of the present disclosure provides an information processing device, including: a first receiving unit, configured to receive transmission mode-related configuration information; a first determination unit, configured to determine whether a transmission scheme of a first signal is a first transmission scheme according to the transmission mode-related configuration information; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

An embodiment of the present disclosure provides an information processing device, including: a first sending unit, configured to send transmission mode-related configuration information to indicate whether a transmission scheme of a first signal is a first transmission scheme; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether a terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have the QCL relationship with respect to at least one large-scale parameter of channel.

An embodiment of the present disclosure provides a processor-readable storage medium, wherein the processor-readable storage medium stores a computer program, and the computer program is executed by the processor to implement the information processing method.

The technical solutions has the following beneficial effects:
In an embodiment of the present disclosure, by receiving the transmission mode-related configuration information; it is determined whether the transmission scheme of the first signal is the first transmission scheme according to the transmission mode-related configuration information; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

### BRIEF DESCRIPTION OF THE DRAWINGS

FIG. 1 is a schematic diagram of a wireless communication system architecture according to an embodiment of the present disclosure;
FIG. 2 is a first schematic flow diagram of an information processing method according to an embodiment of the present disclosure;
FIG. 3 is a second schematic flow diagram of an information processing method according to an embodiment of the present disclosure;
FIG. 4 is a first schematic diagram of a specific implementation flow of an information processing method according to an embodiment of the present disclosure;
FIG. 5 is a second schematic diagram of a specific implementation flow of an information processing method in an embodiment of the present disclosure;
FIG. 6 is a third schematic diagram of a specific implementation flow of an information processing method in an embodiment of the present disclosure;
FIG. 7 is a fourth schematic diagram of a specific implementation flow of an information processing method according to an embodiment of the present disclosure;
FIG. 8 is a fifth schematic diagram of a specific implementation flow of the information processing method of the embodiment of the present disclosure;
FIG. 9 is a sixth schematic diagram of a specific implementation flow of an information processing method according to an embodiment of the present disclosure;
FIG. 10 is a seventh schematic diagram of a specific implementation flow of an information processing method according to an embodiment of the present disclosure;
FIG. 11 is an eighth schematic diagram of a specific implementation flow of an information processing method in an embodiment of the present disclosure;
FIG. 12 is a ninth schematic diagram of a specific implementation flow of an information processing method according to an embodiment of the present disclosure;
FIG. 13 is a schematic structural diagram of a terminal according to an embodiment of the present disclosure;
FIG. 14 is a schematic structural diagram of a network device according to an embodiment of the present disclosure;
FIG. 15 is a first structural schematic diagram of an information processing device according to an embodiment of the present disclosure;
FIG. 16 is a second structural schematic diagram of an information processing device according to an embodiment of the present disclosure.

### DETAILED DESCRIPTION

In order to make the technical problems, technical solutions and advantages to be solved by the present disclosure clearer, the following will describe in detail with reference to the drawings and specific embodiments.

The term "and/or" in the embodiments of the present disclosure describes the association relationship of associated objects, indicating that there may be three relationships, for example, A and/or B, which may mean: A exists alone, A and B exist simultaneously, and B exists alone. The character "/" generally indicates that the contextual objects are an "or" relationship.

The term "plurality" in the embodiments of the present disclosure refers to two or more, and other quantifiers are similar.

It is noted here that the technical solutions provided by the embodiments of the present disclosure may be applicable to various systems, especially 5G systems. For example, the applicable system may be global system of mobile communication (GSM) system, code division multiple access (CDMA) system, wideband code division multiple access (WCDMA) general packet Wireless service (GPRS) system, long term evolution (LTE) system, LTE frequency division duplex (FDD) system, LTE time division duplex (TDD) system, Long term evolution advanced (LTE-A) system, universal mobile telecommunications system (UMTS), worldwide interoperability for microwave access (WiMAX) system, 5G new radio (NR) system, etc. These various systems include terminals and network devices. The system may also include a core network part, such as an evolved packet system (EPS), a 5G system (5GS), and the like.

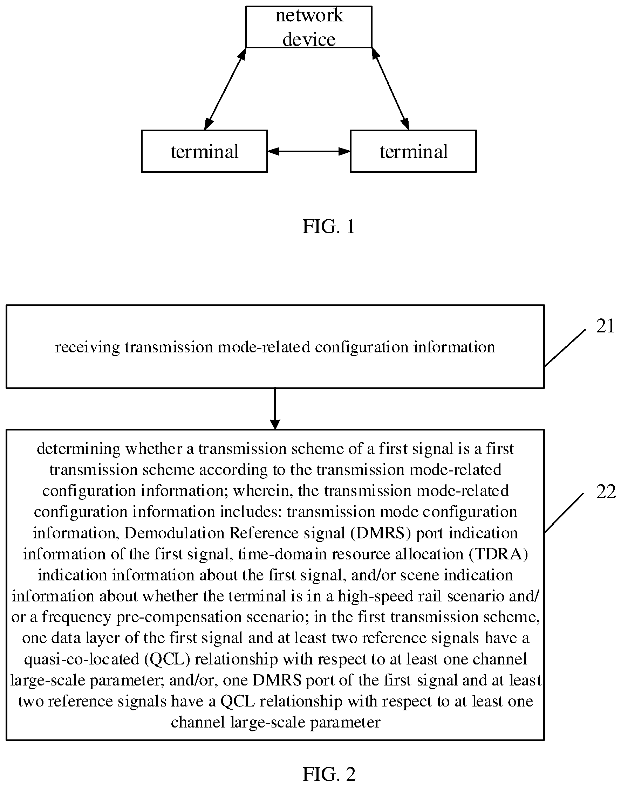

FIG. 1 shows a block diagram of a wireless communication system according to an embodiment of the present disclosure. A wireless communication system includes a terminal and a network device.

The terminal involved in the embodiments of the present disclosure may be a device that provides voice and/or data connectivity to a user, a handheld device with a wireless connection function, or other processing devices connected to a wireless modem. In different systems, the name of the terminal may be different. For example, in a 5G system, the terminal may be called User Equipment (UE). The wireless terminal can communicate with one or more core networks (CN) via the radio access network (RAN), and the wireless terminal can be a mobile terminal device, such as a mobile phone (or called a "cellular" phone) and computers with mobile terminal equipment, such as portable, pocket, hand-held, computer built-in or vehicle-mounted mobile devices, which exchange voice and/or data with the radio access network. For example, Personal Communication Service (PCS) phones, cordless phones, Session Initiated Protocol (SIP) phones, Wireless Local Loop (WLL) stations, Personal Digital Assistant (PDA) and other devices. Wireless terminal may also be called system, subscriber unit, subscriber station, mobile station, remote station, access point, a remote terminal device, an access terminal device, a user terminal device, a user agent, and a user device are not limited in the embodiments of the present disclosure.

The network device involved in the embodiments of the present disclosure may be a base station, and the base station may include multiple cells that provide services for terminals. Depending on the specific application, the base station can also be called an access point, or can be a device in the access network that communicates with wireless terminals through one or more sectors on the air interface, or other names. The network device can be used to interchange received over-the-air frames with Internet Protocol (IP) packets and act as a router between wireless terminals and the rest of the access network, which can include Internet Protocol (IP) communication network. Network devices may also coordinate attribute management for the air interface. For example, the network device involved in this embodiment of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in a long term evolution (LTE) system, 5G base station (gNB) in the 5G network architecture (next generation system), can also be a home evolved base station (Home evolved Node B, HeNB), relay node, a home base station (femto), a pico base station (pico), etc., which are not limited in this embodiment of the present disclosure. In some network structures, a network device may include a centralized unit (CU) node and a distributed unit (DU) node, and the centralized unit and the distributed unit may also be arranged geographically separately.

One or more antennas can be used between network devices and terminals for Multi Input Multi Output (MIMO) transmission. MIMO transmission can be Single User MIMO (SU-MIMO) or Multi-User MIMO (MU-MIMO). According to the shape and number of root antenna combinations, MIMO transmission can be 2D-MIMO, 3D-MIMO, FD-MIMO, or massive-MIMO, or diversity transmission, precoding transmission, or beamforming transmission, etc.

The content involved in the solutions provided by the embodiments of the present disclosure will be firstly introduced below.

The multiple transmission schemes of downlink signals involved in the embodiments of the present disclosure include:
(1) Spatial Division Multiplexing (SDM) scheme 1a;
(2) Frequency Division Multiplexing (FDM) scheme 2a;
(3) FDM scheme 2b;
(4) Time Division Multiplexing (TDM) scheme 3;
(5) TDM scheme 4;
(6) Basic plan;
(7) The fallback scheme of TDM scheme 4.

The commonalities of transmission schemes (1)-(5) include:
(1) One-to-one mapping between the layer of the downlink signal and the port of the demodulation reference signal (DMRS);
(2) The quasi co-location QCL information of the downlink signal and its DMRS port is determined according to a TCI codepoint including two Transmission Configuration Indicator (TCI) states. The TCI codepoint may be referred to as the TCI codepoint corresponding to the downlink signal. The information in the TCI state associated with the TCI codepoint is the QCL information of the downlink signal. The reference signal in the TCI state associated with the TCI codepoint is the QCL reference signal of the downlink signal.

The difference between the transmission schemes (1)-(5) lies in the difference in the relationship between the transmission configuration indication state (TCI state) and the DMRS port of the downlink signal on time-frequency resources.

One TCI state may include an identifier of the TCI state, a QCL type, and a reference signal corresponding to the QCL type. For example, a way to configure the TCI state: QCL type information included in the TCI state (such as qcl-Type1, indicated by QCL-Info) and the identifier of the TCI state (such as tci-StateId, indicated by TCI-StateId). Each QCL type information is indicated by QCL-Info, which includes the specific QCL type (qcl-Type, the value can be one of {typeA, typeB, typeC, typeD}, where type A includes the large-scale parameter of channel {average delay, delay spread, Doppler frequency shift, Doppler spread}, type B includes large-scale parameter of channel {Doppler frequency shift, Doppler spread}, type C includes large-scale parameter of channel {Average delay, Doppler frequency shift}, type D includes large-scale parameter of channel {receiving space parameters}), reference signal type (such as csi-rs, SSB), reference signal identifier (such as NZP-CSI-RS-ResourceId, SSB-Index ), the cell where the reference signal is located and the bandwidth part BWP (bwp-Id). Wherein, the reference signals in the same QCL-Info are associated with the QCL type, that is, the reference signal in one QCL-Info is the reference signal corresponding to the QCL type indicated by the QCL-Info. In addition, some ways to determine the QCL reference signal of the downlink signal include:

When the radio resource control RRC signaling configures only one TCI state for the downlink signal, the TCI state corresponding to the downlink signal transmission is the TCI state configured by the RRC signaling, and the reference signal included in the TCI state is the QCL reference signal of the downlink signal.

When the RRC signaling configures multiple TCI states for the downlink signal, and does not configure the TCI indicating the downlink signal through the DCI, the TCI state corresponding to the downlink signal transmission can be indicated through the MAC-CE signaling. One implementation is: RRC signaling configures multiple TCI states, MAC-CE signaling activates one TCI codepoint, the TCI codepoint corresponds to one or more TCI states configured by RRC, and the TCI codepoint corresponding to the downlink signal is the TCI codepoint activated by MAC-CE. The reference signal included in the TCI state associated with the TCI codepoint is the QCL reference signal of the downlink signal.

When the RRC signaling is configured to indicate the TCI of the downlink signal through the DCI, the TCI codepoint corresponding to the PDSCH transmission is indicated through the TCI field in the DCI. One implementation is: RRC signaling configures multiple TCI states, and MAC-CE signaling configures multiple TCI codepoints for activation and deactivation of the TCI field in DCI, and each TCI codepoint corresponds to one or more TCI states, the TCI field in the DCI selects one TCI codepoint from multiple TCI codepoints activated by the MAC-CE as the TCI codepoint corresponding to the downlink signal. The reference signal included in the TCI state associated with the TCI codepoint corresponding to the downlink signal is the QCL reference signal of the downlink signal.

Optionally, the DCI is a DCI for scheduling the downlink signal.

In the embodiment of the present disclosure, the downlink signal may be a downlink shared channel (PDSCH) signal, a downlink control channel PDCCH signal, SSB, and the like. In the following, for the convenience of expression, the PDSCH signal is taken as an example in many places for illustration.

The details of the above transmission schemes are as follows:
(1) SDM scheme 1a:
   The DMRS port of the PDSCH is in two code division multiplexing (CDM) groups, wherein the DMRS port of one CDM group is associated with one TCI state, and the DMRS port of the other CDM group is associated with another TCI state.
(2) FDM scheme 2a:
   The Transport Block (TB) of the same PDSCH transmission occasion is associated with two TCI states, and the two TCI states are respectively associated with a group of resources, and the resources associated with the two TCI states do not overlap in the frequency domain. One TCI state associated with a group of resources means that the DMRS port of PDSCH is associated with the TCI state on this group of resources.
(2) FDM scheme 2b:
   The same PDSCH TB is transmitted through two PDSCH transmission occasions, and each of the two PDSCH transmission occasions is associated with one TCI state, and the two PDSCH transmission occasions do not overlap in the frequency domain.
(3) TDM scheme 3: The number of PDSCH transmission occasions depends on the number of TCI states included in the TCI codepoint indicated for the PDSCH:
   1) When a TCI codepoint including two TCI states is indicated, the PDSCH is transmitted in a given time slot through two PDSCH transmission occasions, each PDSCH transmission occasion is associated with one TCI state, and the PDSCH transmission occasion associated with two TCI states does not overlap in the time domain (TDM 3).
   2) When a TCI codepoint including one TCI state is indicated, a TB is transmitted through a PDSCH transmission occasion, and the TCI state is associated with the PDSCH transmission occasion (TDM 3 falls back to the basic transmission scheme).
(4) TDM scheme 4: PDSCH is transmitted through multiple PDSCH transmission occasions.
   1) When a TCI codepoint including two TCI states is indicated, the PDSCH is transmitted through multiple PDSCH transmission occasions, different PDSCH transmission occasions are transmitted on different time slots, and each TCI state is associated with one or more PDSCH transmissions occasion, and the two TCI states are associated with different PDSCH transmission occasions (TDM 4).
   2) When a TCI codepoint including one TCI state is indicated, the PDSCH is transmitted through multiple PDSCH transmission occasions, different PDSCH transmission occasions are transmitted on different time slots, and all PDSCH transmission occasions are associated with the TCI state ( fallback scheme for TDM 4).

In the above solutions, optionally, when one PDSCH transmission occasion is associated with one TCI state, the DMRS port corresponding to the PDSCH transmission occasion is also associated with the TCI state. Optionally, when one TB block of the PDSCH is associated with one TCI state, the DMRS port corresponding to the TB of the PDSCH is also associated with the TCI state.

The basic transmission scheme means that the PDSCH is only associated with one TCI state.

In the embodiments of the present disclosure, the association of one DMRS port with one TCI state means that the TCI state is used to indicate the QCL information of the DMRS port. One TCI state associated with one group of resources means that the TCI state is used to indicate the QCL information of the DMRS port and/or PDSCH layer on this group of resources. One TCI state associated with one PDSCH transmission opportunity means that the TCI state is used to indicate the QCL information of the PDSCH layer and/or the DMRS port of the PDSCH in the PDSCH transmission opportunity.

Optionally, the above-mentioned certain TCI state being used to indicate the QCL information of one DMRS port means that the TCI state is used to indicate a reference signal having a QCL relationship with the DMRS port. The certain TCI state being used to indicate the QCL information of a layer of a signal means that this TCI state is used to indicate a reference signal having a QCL relationship with the layer.

The basic transmission scheme of PDSCH is: all DMRS ports of PDSCH are associated to the same TCI state, and all QCL types in this TCI state have only one associated reference signal.

In addition, in typical application scenarios of high-speed mobility, such as high speed transmission (HST) scenarios, multiple transmission/reception points (TRP, may be multiple Remote Radio Heads (RRH)) can simultaneously send downlink signals to high-speed mobile terminal equipment. Among them, large-scale parameter such as the Doppler shift of the channel of the downlink signal can be determined through a Quasi Co-Location (QCL) reference signal sent through multiple TRPs at the same time, and the channel estimation interpolation coefficients are determined according to the large-scale parameter to estimate the channel.

Further, the network device may send the QCL information of the DMRS port of the downlink signal to the terminal, and the QCL information includes QCL types and reference signals associated with each QCL type. Among them, one QCL type includes one or more large-scale parameter of channel, and the terminal can deduce these large-scale parameters of channel of the DMRS port through these large-scale parameters of the channel of the reference signal corresponding to the QCL type, so as to perform channel estimation for downlink signals in a better way. For the convenience of description, when the large-scale parameter of channel A of one antenna port can be deduced from the large-scale parameter of channel A of the other antenna port, it is considered that the two antenna ports have a QCL relationship with respect to the large-scale parameter of channel A. Similarly, when the large-scale parameter of channel A of a layer of a signal can be deduced from the large-scale parameter of channel A of an antenna port, it is considered that this layer and the antenna port have a QCL relationship with respect to the large-scale parameter of channel A.

In addition, considering that the terminal equipment is moving at high speed, when the positions of TRPs are different, the paths corresponding to each TRP may come from opposite directions, so that the Doppler frequency shifts of multiple paths are different. The reference signal sent by multiple TRPs at the same time cannot accurately obtain the Doppler shift and Doppler spread of the downlink channel, which makes the channel estimation result inaccurate, thereby affecting the demodulation performance of the downlink signal. In order to improve the demodulation performance of the downlink signal, it can be considered that each TRP sends its own corresponding reference signal, and the terminal jointly determines the channel estimation coefficient of the downlink channel based on multiple reference signals, so as to better estimate the downlink channel. Under this scheme, one layer of PDSCH and/or one DMRS port has a QCL (quasi co-location) relationship with multiple reference signals on at least one large-scale parameter of channel.

Based on the above, the embodiments of the present disclosure provide an information processing method, device, a terminal and a network device to solve the problem in the related art that a specific transmission scheme cannot be accurately determined when there are multiple Multi-TRP transmission schemes in the system. Among them, the information processing method, device, the terminal and the network device are based on the same concept. Since the principles of solving problems of the information processing method, device, the terminal and the network device are similar, the implementation of the information processing method, device, the terminal and network device can be referred to each other, the similar content will not be repeated.

The information processing method provided by the embodiment of the present disclosure can be applied to a terminal, as shown in FIG. 2, including:
Step 21: Receiving transmission mode-related configuration information;
Step 22: determining whether a transmission scheme of a first signal is a first transmission scheme according to the transmission mode-related configuration information; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

Wherein, the first signal may be a signal of a first channel, and the first channel includes: a downlink shared channel (PDSCH), and/or an uplink shared channel (PUSCH), and/or an uplink control channel (PUCCH); the transmission mode configuration information may be obtained by radio resource control (RRC) signaling, and/or medium access control control element (MAC-CE) signaling, and/or downlink control information (DCI) signaling.

In an embodiment of the present disclosure, "in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel", which can be specifically implemented as: in the first transmission scheme, one layer of the first signal and at least two reference signals have a QCL relationship about the same large-scale parameter of channel; and/or, one DMRS port of the first signal and at least two reference signals have a QCL relationship about the same at least one large-scale parameter of channel.

Regarding "having a QCL relationship with at least two reference signals about at least one large-scale parameter of channel", specifically, it may be implemented as: having a QCL relationship with at least two reference signals with respect to the same large-scale parameter of channel.

The indicating "the terminal is in the frequency pre-compensation scenario" may specifically instruct the network device to perform frequency pre-compensation of the downlink signal, but it is not limited thereto.

In an embodiment of the present disclosure, by receiving the transmission mode-related configuration information; it is determined whether the transmission scheme of the first signal is the first transmission scheme according to the transmission mode-related configuration information; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

In an embodiment of the present disclosure, the determining whether the transmission scheme of the first signal is the first transmission scheme according to the transmission mode-related configuration information includes: determining the number of the code division multiplexing (CDM) group where the DMRS port of the first signal is located and/or the quasi-co-located QCL indication information of the DMRS port of the first signal according to the DMRS port indication information; determining whether the transmission scheme of the first signal is the first transmission scheme according to the number and/or the QCL indication information.

The "quasi-co-located QCL indication information of the DMRS port" may specifically be implemented as: the QCL indication information of the DMRS port of the layer of the first signal, but it is not limited thereto. For example, the QCL information of the DMRS port is indicated by the QCL indication information about the layer of the first signal. When the QCL information of the DMRS port is indicated by the QCL indication information about the layer of the first signal, optionally, the reference signal used to determine a certain large-scale parameter of channel of a layer of the first signal is used to determine the parameter signal of this large-scale parameter of channel of the DMRS port corresponding to the layer.

Wherein, the determining whether the transmission scheme of the first signal is the first transmission scheme according to the QCL indication information includes: determining the QCL type information and/or number information of the transmission configuration indication state TCI state according to the QCL indication information; determining whether the transmission scheme of the first signal is the first transmission scheme according to the QCL type information and/or the number information of the TCI state.

The following implementation are provided for "determining whether the transmission scheme of the first signal is the first transmission scheme" in the embodiments of the present disclosure, but not limited thereto:
Mode 1, determining whether the transmission scheme of the first signal is the first transmission scheme according to the number and/or the QCL indication information includes: determining that the transmission scheme of the first signal is the first transmission scheme in case that a first condition is satisfied; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.

Among them, the "associated with at least two TCI states" can be specifically implemented as: the transmission configuration indication codepoint TCI codepoint indicated by the transmission configuration indication field in the DCI for scheduling the first signal includes at least two TCI states, where the "the QCL indication information indicates that the first signal is associated with at least two TCI states", and/or, "the QCL indication information indicates that the DMRS port of the first signal is associated with at least two TCI states", corresponding specifically to: the first signal and/or the transmission configuration indication codepoint TCI codepoint corresponding to the DMRS port of the first signal includes at least two TCI states; the following "associated with at least two TCI states" can also refer to the content here, and will not be repeated herein.

The second transmission scheme may specifically be the above-mentioned TDM 4 scheme, but is not limited thereto.

Mode 2, determining whether the transmission scheme of the first signal is the first transmission scheme according to the transmission mode-related configuration information includes: determining that the transmission scheme of the first signal is the first transmission scheme in case that a second condition is satisfied; wherein, the second condition includes that the transmission mode configuration information indicates a value corresponding to the first transmission scheme.

Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.

Mode 4 based on Mode 3, the second condition further includes: the number of CDM groups in which the DMRS port of the first signal is located is 1.

Mode 5, determining whether the transmission scheme of the first signal is the first transmission scheme according to the transmission mode-related configuration information includes: determining that the transmission scheme of the first signal is the first transmission scheme in case that a third condition is satisfied; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.

Mode 6 based on Mode 5, the third condition further includes: the TDRA field of the DCI that schedules the first signal does not indicate a parameter corresponding to the second transmission scheme; wherein, the second transmission scheme is different from the first transmission scheme.

Mode 7, determining whether the transmission scheme of the first signal is the first transmission scheme according to the QCL type information includes: determining that the transmission scheme of the first signal is the first transmission scheme in case that a fifth condition is satisfied; wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameter of channel on a delay property; the second type includes large-scale parameter of channel on a delay property and large-scale parameter of channel on a frequency property.

Wherein, the large-scale parameter of channel included in the first type may specifically be {average delay, delay spread} or { delay spread} or {average delay}, but not limited thereto; the large-scale parameter of channel included in the second type can specifically be {average delay, delay spread, Doppler shift, Doppler spread}, but it is not limited thereto.

In the embodiments of the present disclosure, there may not only be one QCL type in the TCI state, but there may also be QCL-Type D (receiving space parameters), and the same applies to other modes.

Mode 8 and Mode 9, determining whether the transmission scheme of the first signal is the first transmission scheme according to the QCL type information includes: determining that the transmission scheme of the first signal is the first transmission scheme in case that a sixth condition is satisfied; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the mode 9; but not limited thereto.

The large-scale parameter of channel included in the third type may specifically be {Doppler shift, Doppler spread}.

With respect to Modes 7-9, in the embodiments of the present disclosure, the information processing method further includes: determine a frequency of a downlink signal according to the reference signal corresponding to the QCL type indicated in the TCI state and including the large-scale parameter of channel on a frequency property; and/or, determining a transmission frequency of an uplink signal according to the reference signal indicated in the TCI state and corresponding to the QCL type including the large-scale parameter of channel on a frequency property.

Wherein, the "QCL type including the large-scale parameter of channel on a frequency property " may specifically be implemented as: a QCL type including {Doppler shift} and/or {Doppler spread}.

Mode 10, the determining whether the transmission scheme of the first signal is the first transmission scheme according to the QCL type information includes: determining that the transmission scheme of the first signal is the first transmission scheme in case that a seventh condition is satisfied; wherein, the seventh condition includes: determining a reference signal that has a QCL relationship with the DMRS port on large-scale parameter of channel on a frequency property according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

Among them, the "determining the reference signal with the QCL relationship with the DMRS port on a large-scale parameter of the channel frequency characteristic according to the first rule" may be indicated by the network device, or determined according to a predefined method or rule in the protocol. For example, if the network device indicates that the UE is in the frequency pre-compensation scenario and indicates the TCI state of the mode 10, it is determined to be the first transmission scheme.

The large-scale parameter of channel included in the third type may specifically be {average delay, delay spread, Doppler shift, Doppler spread}.

Optionally, the transmission mode-related configuration information instructs the terminal to determine a reference signal that has a QCL relationship with the DMRS port on a large-scale parameter of channel frequency characteristics according to the first rule;
Determining a reference signal having a QCL relationship with the DMRS port on large-scale parameter of channel on a frequency property according to the first rule includes: determining a target TCI state; the reference signal corresponding to a QCL relationship of large-scale parameter of channel on a frequency property included in the target TCI state is used as the reference signal having the QCL relationship with the DMRS port on the large-scale parameter of channel on a frequency property.

The large-scale parameter of channel on a frequency property include { Doppler shift, Doppler spread}.

Optionally, the transmission mode-related configuration information instructs the terminal to determine the reference signal that has a QCL relationship with the DMRS port on the large-scale parameter of the channel frequency characteristics according to the first rule;

Determining a reference signal having a QCL relationship with the DMRS port with respect to the large-scale parameter of channel on a frequency property according to the first rule includes: ignoring the following large-scale parameter of channel in the first TCI state: {Doppler shift, Doppler extension}. Optionally, the first TCI state may be a TCI state determined according to a preset rule. For example, it is the TCI state with the smallest number among the multiple TCI states associated with the DMRS. For another example, it is the TCI state with the highest number among the multiple TCI states associated with the DMRS.

In the embodiment of the present disclosure, determining the reference signal having a QCL relationship with the DMRS port on the large-scale parameter of channel on a frequency property according to the first rule includes: determining the target TCI state according to first indication information sent by the network device; a reference signal corresponding to the QCL type of the large-scale parameter of channel on a frequency property included in the target TCI state is used as the reference signal having a QCL relationship with the DMRS port on the large-scale parameter of channel on a frequency property.

Wherein, the first indication information is transmitted through RRC signaling, and/or MAC-CE signaling, and/or DCI signaling.

In the embodiment of the present disclosure, optionally, the information processing method further includes: receiving first indication information used to indicate the target TCI state; the first rule is that the reference signal corresponding to the QCL type of the large-scale parameter of channel on a frequency property included in the target TCI state is a reference signal that has a QCL relationship with the DMRS port on the large-scale parameter of channel on a frequency property. After receiving the target TCI state, the terminal uses the reference signal corresponding to the QCL type of the large-scale parameter of channel on a frequency property included in the target TCI state to determine the channel frequency characteristics of the first signal, and does not use other TCI states to determine the channel frequency characteristics of the first signal.

In the embodiment of the present disclosure, optionally, the information processing method further includes: receiving first indication information used to indicate the target TCI state; the first rule is that the UE ignores the reference signal corresponding to the QCL type of the large-scale parameter of the channel frequency characteristics included in the target TCI state, and the reference signal corresponding to the QCL type of the large-scale parameter of channel on a frequency property in other TCI states is used to determine the reference signal of the large-scale parameter of the channel frequency characteristic of the first signal. After receiving the target TCI state, the terminal ignores the reference signal corresponding to the QCL type of the large-scale parameter of channel on a frequency property in the target TCI state, and uses other TCI states to determine the channel frequency characteristic of the first signal.

In the embodiment of the present disclosure, optionally, the information processing method further includes: receiving first indication information used to indicate the target TCI state; the reference signal corresponding to the QCL type of large-scale parameter of channel on a delay property included in the target TCI state is a reference signal having a QCL relationship with the DMRS port on large-scale parameter of channel on a delay property. After receiving the target TCI state, the terminal uses the reference signal corresponding to the QCL type of large-scale parameter of channel on a delay property included in the target TCI state to determine the channel delay characteristic of the first signal, and does not use other TCI states to determine the channel frequency characteristics of the first signal.

In the embodiment of the present disclosure, optionally, the information processing method further includes: receiving first indication information used to indicate the target TCI state; the first rule is that the UE ignores the reference signal corresponding to the QCL type of large-scale parameter of channel on a delay property included in the target TCI state, and the reference signal corresponding to the QCL type of large-scale parameter of channel on a delay property in other TCI states is used to determine the reference signal of the large-scale parameter of channel on a frequency property of the channel of the first signal. After receiving the target TCI state, the terminal ignores the reference signal corresponding to the QCL type of large-scale parameter of channel on a delay property included in the target TCI state, and uses other TCI states to determine the delay characteristic of the channel of the first signal.

Mode 11, the DMRS port indication information includes the QCL indication information of the DMRS port of the first signal; the determining whether the transmission scheme of the first signal is the first transmission scheme according to the transmission mode-related configuration information includes: determining that the transmission scheme of the first signal is the first transmission scheme in case that an eighth condition is satisfied; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

In the embodiment of the present disclosure, the eighth condition in this mode may be used in combination with any of the above-mentioned conditions, which is not limited here.

In the foregoing modes and their combinations, optionally, the QCL indication information is indicated through RRC signaling. An implementation is: when the radio resource control RRC signaling only configure one TCI state for the first signal, the QCL indication information is the TCI state configured by the RRC signaling. The reference signal included in the TCI state associated with the TCI codepoint corresponding to the first signal is the QCL reference signal of the first signal and/or the DMRS port of the first signal.

In the above modes and their combinations, optionally, the QCL indication information is indicated through MAC-CE signaling. One implementation is as follows: RRC signaling configures multiple TCI states for the first signal, and MAC-CE signaling activates one TCI codepoint for the first signal, the TCI codepoint corresponds to one or more TCI states configured by RRC, and the information indicated by the MAC-CE signaling is the QCL indication information. The reference signal included in the TCI state corresponding to the TCI codepoint is the QCL reference signal of the first signal and/or the DMRS port of the first signal.

In the foregoing modes and their combinations, optionally, the QCL indication information is indicated by a TCI field in the DCI for scheduling first signal. For example, the RRC signaling configuration indicates the TCI of the first signal through the DCI, and the QCL indication information is the TCI codepoint corresponding to the first signal, and is indicated through the TCI field in the DCI. One implementation is: RRC signaling configures multiple TCI states, and MAC-CE signaling configures multiple TCI codepoints for activation and deactivation of the TCI field in DCI, and each TCI codepoint corresponds to one or more TCI states, the TCI field in the DCI selects one TCI codepoint from multiple TCI codepoints activated by the MAC-CE as the TCI codepoint corresponding to the first signal. The reference signal included in the TCI state corresponding to the TCI codepoint is the QCL reference signal of the first signal and/or the DMRS port of the first signal.

With regard to the above modes, in the embodiment of the present disclosure, the information processing method further includes: determining the frequency of the downlink signal according to the reference signal used to determine the transmission frequency of the uplink signal.

For each of the above modes, in the embodiment of the present disclosure, the information processing method further includes: determine the frequency of the downlink signal according to the reference signal that has a QCL relationship with the DMRS port of the first signal with respect to the large-scale parameter of channel on a frequency property; and/or, determining the transmission frequency of the uplink signal according to the reference signal having a QCL relationship with the DMRS port of the first signal with respect to the large-scale parameter of channel on a frequency property.

The " large-scale parameter of channel on a frequency property " here can be specifically realized as Doppler spread and/or Doppler frequency shift, but it is not limited thereto.

In an embodiment of the present disclosure, the information processing method further includes: determining that the transmission scheme of the first signal is the third transmission scheme in case that a ninth condition is satisfied; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

The third transmission scheme may specifically be implemented as the above-mentioned SDM scheme 1a, but is not limited thereto.

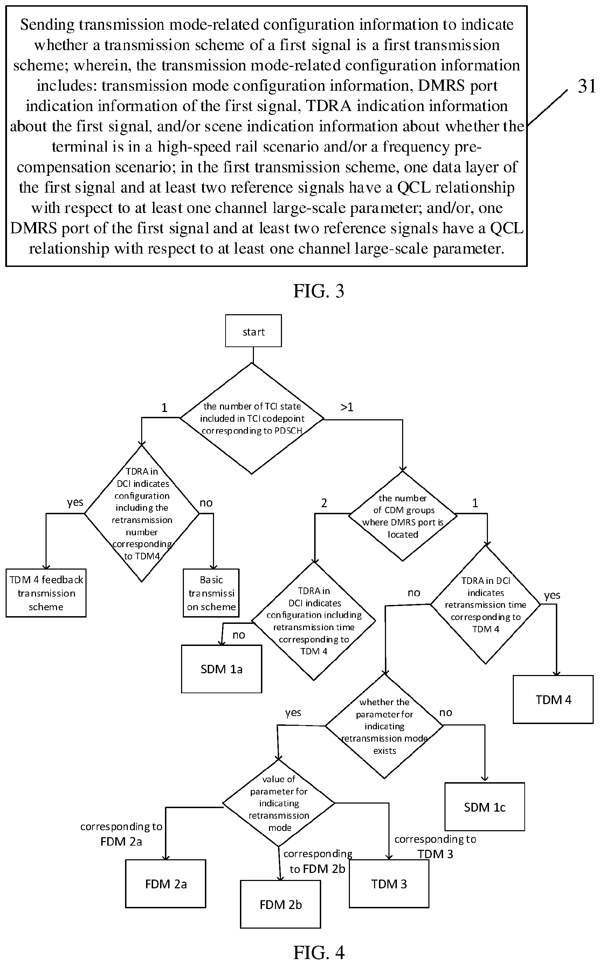

An embodiment of the present disclosure also provides an information processing method, which can be applied to a network device, as shown in FIG. 3, including:
Step 31: Sending transmission mode-related configuration information to indicate whether a transmission scheme of a first signal is a first transmission scheme; wherein, the transmission mode-related configuration information includes: transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

Wherein, the first signal may be a signal of a first channel, and the first channel includes: a downlink shared channel (PDSCH), and/or an uplink shared channel (PUSCH), and/or an uplink control channel (PUCCH); the transmission mode configuration information may be obtained by radio resource control (RRC) signaling, and/or medium access control control element (MAC-CE) signaling, and/or downlink control information (DCI) signaling.

In an embodiment of the present disclosure, "in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel", which can be specifically implemented as: in the first transmission scheme, one layer of the first signal and at least two reference signals have a QCL relationship about the same large-scale parameter of channel; and/or, one DMRS port of the first signal and at least two reference signals have a QCL relationship about the same at least one large-scale parameter of channel.

Regarding "having a QCL relationship with at least two reference signals about at least one large-scale parameter of channel", specifically, it may be implemented as: having a QCL relationship with at least two reference signals with respect to the same large-scale parameter of channel.

The indicating "the terminal is in the frequency pre-compensation scenario" may specifically instruct the network device to perform frequency pre-compensation of the downlink signal, but it is not limited thereto.

In the embodiment of the present disclosure, transmission mode-related configuration information is sent to indicate whether the transmission scheme of the first signal is the first transmission scheme; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

In the embodiment of the present disclosure, the sending transmission mode-related configuration information to indicate whether the transmission scheme of the first signal is the first transmission scheme includes: using the DMRS port indication information to indicate the number of code division multiplexing CDM groups where the DMRS port of the first signal is located, and/or the quasi-co-located QCL indication information of the DMRS port of the first signal, to indicate whether the transmission scheme of the first signal is the first transmission scheme.

The "quasi-co-located QCL indication information of the DMRS port" may specifically be implemented as: the QCL indication information of the DMRS port of the layer of the first signal, but it is not limited thereto. For example, the QCL information of the DMRS port is indicated by the QCL indication information about the layer of the first signal. When the QCL information of the DMRS port is indicated by the QCL indication information about the layer of the first signal, optionally, the reference signal used to determine a certain large-scale parameter of channel of a layer of the first signal is used to determine the parameter signal of this large-scale parameter of channel of the DMRS port corresponding to the layer.

Wherein, using the DMRS port indication information to indicate QCL indication information to indicate whether the transmission scheme of the first signal is the first transmission scheme includes: indicating QCL type information and/or the number information of transmission configuration indication state TCI states through the QCL indication information, to indicate whether the transmission scheme of the first signal is the first transmission scheme.

The following implementation examples are provided for "indicating whether the transmission scheme of the first signal is the first transmission scheme" in the embodiments of the present disclosure, but not limited thereto:
Mode 1, the DMRS port indication information indicates the number of code division multiplexing CDM groups where the DMRS port of the first signal is located, and/or the quasi-co-location QCL indication information of the DMRS port of the first signal to indicate whether the transmission scheme of the first signal is the first transmission scheme, including: information indicating that the first condition is met, to indicate that the transmission scheme of the first signal is the first transmission scheme; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.

Wherein, the "information indicating that the first condition is met" may be specifically implemented as "the information indicating that the first condition is met through the DMRS port indication information", but it is not limited thereto.

Regarding "the TDRA field of the DCI that schedules the first signal does not indicate the parameters corresponding to the second transmission scheme" is a limitation on the first condition, not a limitation on the indicated information. Subsequent similar places refer to the description here, which will not be repeated.

Among them, the "associated with at least two TCI states" can be specifically implemented as: the transmission configuration indication codepoint TCI codepoint indicated by the transmission configuration indication field in the DCI for scheduling the first signal includes at least two TCI states, where the "the QCL indication information indicates that the first signal is associated with at least two TCI states", and/or, "the QCL indication information indicates that the DMRS port of the first signal is associated with at least two TCI states", corresponding specifically to: the first signal and/or the transmission configuration indication codepoint TCI codepoint corresponding to the DMRS port of the first signal includes at least two TCI states; the following "associated with at least two TCI states" can also refer to the content here, and will not be repeated herein.

The second transmission scheme may specifically be the above-mentioned TDM 4 scheme, but is not limited thereto.

Mode 2, the transmission mode-related configuration information is sent to indicate whether the transmission scheme of the first signal is the first transmission scheme, including: information indicating that the second condition is met, so as to indicate that the transmission scheme of the first signal is the first transmission scheme; Wherein, the second condition includes a value corresponding to the first transmission scheme indicated by the transmission mode configuration information.

The "information indicating that the second condition is met" may be specifically implemented as "the information indicating that the second condition is met through the transmission mode-related configuration information", but it is not limited thereto.

The "value corresponding to the first transmission scheme" may be specifically indicated by "transmission mode configuration information in the transmission mode-related configuration information", but it is not limited thereto.

Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.

Mode 4 based on Mode 3, the second condition further includes: the number of CDM groups in which the DMRS port of the first signal is located is 1.

Mode 5, the sending transmission mode-related configuration information to indicate whether the transmission scheme of the first signal is the first transmission scheme includes: indicating information that the third condition is met through the DMRS port indication information, to indicate the transmission scheme of the first signal is the first transmission scheme; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.

Mode 6 based on Mode 5, the third condition further includes: the TDRA field of the DCI that schedules the first signal does not indicate a parameter corresponding to the second transmission scheme; wherein, the second transmission scheme is different from the first transmission scheme.

Mode 7: using the QCL indication information to indicate the QCL type information to indicate whether the transmission scheme of the first signal is the first transmission scheme, including: indicating information that the fifth condition is met through the QCL indication information to indicate that the transmission scheme of the first signal is the first transmission scheme, wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameters of channel on a delay property; the second type includes large-scale parameter of channel on a delay property and large-scale parameter of channel on a frequency property.

Wherein, the large-scale parameter of channel included in the first type may specifically be {average delay, delay spread} or { delay spread} or {average delay}, but not limited thereto; the large-scale parameter of channel included in the second type can specifically be {average delay, delay spread, Doppler shift, Doppler spread}, but it is not limited thereto.

In the embodiments of the present disclosure, there may not only be one QCL type in the TCI state, but there may also be QCL-Type D (receiving space parameters), and the same applies to other modes.

Mode 8 and Mode 9, using the QCL indication information to indicate QCL type information to indicate whether the transmission scheme of the first signal is the first transmission scheme, including: indicating information that the sixth condition is met through the QCL indication information, to indicate that the transmission scheme of the first signal is the first transmission scheme; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the ninth mode; but not limited thereto.

The large-scale parameter of channel included in the third type may specifically be {Doppler shift, Doppler spread}.

With respect to modes 7 to 9, in the embodiments of the present disclosure, the information processing method further includes: using the TCI state to indicate to the reference signal corresponding to the QCL type including the large-scale parameter of channel on a frequency property.

Wherein, the "QCL type including large-scale parameter of channel on a frequency property " may specifically be implemented as: a QCL type including {Doppler shift} and/or {Doppler spread}.

Mode 10: using the QCL indication information to indicate QCL type information to indicate whether the transmission scheme of the first signal is the first transmission scheme, including: indicating information that the seventh condition is met through the QCL indication information to indicate that the transmission scheme of the first signal is the first transmission scheme; wherein, the seventh condition includes: determining a reference signal that has a QCL relationship with the DMRS port on a large-scale parameter of channel frequency characteristics according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

Among them, the "determining the reference signal with the QCL relationship with the DMRS port on the large-scale parameter of channel on a frequency property according to the first rule" may be indicated by the network device, or determined according to a predefined method or rule in the protocol. For example, if the network device indicates that the UE is in the frequency pre-compensation scenario and indicates the TCI state of the mode 10, it is determined to be the first transmission scheme.

The large-scale parameter of channel included in the third type may specifically be {average delay, delay spread, Doppler shift, Doppler spread}.

In the embodiment of the present disclosure, optionally, the information processing method further includes: sending first indication information used to indicate the target TCI state; the reference signal corresponding to the QCL type of the large-scale parameter of channel on a frequency property included in the target TCI state is a reference signal having a QCL relationship with the DMRS port with respect to the large-scale parameter of channel on a frequency property.

Wherein, the first indication information is transmitted through RRC signaling, and/or MAC-CE signaling, and/or DCI signaling.

Mode 11, the DMRS port indication information includes the QCL indication information of the DMRS port of the first signal; and the sending transmission mode-related configuration information to indicate whether the transmission scheme of the first signal is the first transmission scheme includes: indicating information that the eighth condition is met through the transmission mode-related configuration information to indicate that the transmission scheme of the first signal is the first transmission scheme; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

In the embodiment of the present disclosure, the eighth condition in this mode may be used in combination with any of the above-mentioned conditions, which is not limited here.

In the foregoing modes and their combinations, optionally, the QCL indication information is indicated through RRC signaling. An implementation is: when the radio resource control RRC signaling only configure one TCI state for the first signal, the QCL indication information is the TCI state configured by the RRC signaling. The reference signal included in the TCI state associated with the TCI codepoint corresponding to the first signal is the QCL reference signal of the first signal and/or the DMRS port of the first signal.

In the above modes and their combinations, optionally, the QCL indication information is indicated through MAC-CE signaling. One implementation is as follows: RRC signaling configures multiple TCI states for the first signal, and MAC-CE signaling activates one TCI codepoint for the first signal, the TCI codepoint corresponds to one or more TCI states configured by RRC, and the information indicated by the MAC-CE signaling is the QCL indication information. The reference signal included in the TCI state corresponding to the TCI codepoint is the QCL reference signal of the first signal and/or the DMRS port of the first signal.

In the foregoing modes and their combinations, optionally, the QCL indication information is indicated by a TCI field in the DCI for scheduling first signal. For example, the RRC signaling configuration indicates the TCI of the first signal through the DCI, and the QCL indication information is the TCI codepoint corresponding to the first signal, and is indicated through the TCI field in the DCI. One implementation is: RRC signaling configures multiple TCI states, and MAC-CE signaling configures multiple TCI codepoints for activation and deactivation of the TCI field in DCI, and each TCI codepoint corresponds to one or more TCI states, the TCI field in the DCI selects one TCI codepoint from multiple TCI codepoints activated by the MAC-CE as the TCI codepoint corresponding to the first signal. The reference signal included in the TCI state corresponding to the TCI codepoint is the QCL reference signal of the first signal and/or the DMRS port of the first signal.

With regard to the above modes, in the embodiment of the present disclosure, the information processing method further includes: indicating a reference signal used to determine the transmission frequency of the uplink signal.

With regard to the above modes, in the embodiments of the present disclosure, the information processing method further includes: indicating a reference signal that has a QCL relationship with the DMRS port of the first signal with respect to the large-scale parameter of channel on a frequency property.

The "the large-scale parameter of channel on a frequency property" here can be specifically realized as Doppler spread and/or Doppler frequency shift, but it is not limited thereto.

In an embodiment of the present disclosure, the information processing method further includes: indicating information that the ninth condition is met through the transmission mode-related configuration information, so as to indicate that the transmission scheme of the first signal is the third transmission scheme; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

The third transmission scheme may specifically be implemented as the above-mentioned SDM scheme 1a, but is not limited thereto.

The information processing method provided by the embodiments of the present disclosure will be further described below in conjunction with multiple sides such as terminals and network devices. The first transmission scheme is hereinafter referred to as the transmission scheme of SDM 1c, and the first signal takes the PDSCH signal as an example, hereinafter referred to as PDSCH.

In view of the above technical problems, the embodiment of the present disclosure provides an information processing method. It is explained here that the systems applicable to the solution provided by the embodiment of the present disclosure include but not limited to NR system, LTE system, 6G system, and their evolved version systems.

The transmission scheme of SDM 1c includes:
The layer and/or DMRS port of the PDSCH has a QCL relationship with the plurality of reference signals with respect to at least one large-scale parameter of channel. Optionally, all layers and/or DMRS ports of the PDSCH have a QCL relationship with multiple reference signals with respect to at least one large-scale parameter of channel.

Optionally, specifically, one layer and/or one DMRS port of the PDSCH have a QCL relationship with multiple reference signals with respect to at least one large-scale parameter of channel.

Optionally, specifically, one layer of PDSCH and multiple reference signals have a QCL relationship with respect to the same large-scale parameter of channel and/or one DMRS port of PDSCH and multiple reference signals have a QCL relationship with respect to the same large-scale parameter of channel.

Optionally, specifically, any layer of PDSCH and multiple reference signals have a QCL relationship about the same large-scale parameter of channel and/or any DMRS port of PDSCH and multiple reference signals have a QCL relationship about the same large-scale parameter of channel.

Optionally, specifically, all layers of the PDSCH and multiple reference signals have a QCL relationship about the same large-scale parameter of channel and/or all DMRS ports of the PDSCH and multiple reference signals have a QCL relationship about the same large-scale parameter of channel. For example, the PDSCH has two DMRS ports (DMRS port 1 and DMRS port 2) in total, and each of these two DMRS ports has a QCL relationship with a plurality of reference signals with respect to the large-scale parameter of channel A. For example, DMRS port 1 has a QCL relationship with reference signal RS 1 and reference signal RS 2 with respect to large-scale parameter of channel A; DMRS port 2 has a QCL relationship with reference signal RS 1 and reference signal RS 2 with respect to large-scale parameter of channel A. Optionally, all DMRS ports of the PDSCH have a QCL relationship with the same plurality of reference signals on the same large-scale parameter of channel. Still taking PDSCH with two DMRS ports (DMRS port 1 and DMRS port 2) as an example, both of these two DMRS ports have a QCL relationship with reference signal RS 1 and reference signal RS 2 with respect to large-scale parameter of channel A.

Optionally, the network device indicates to the UE the QCL relationship between the layer/DMRS port of the PDSCH and the reference signal with respect to the large-scale parameter of channel through the TCI indication information. One TCI indication information indicates one TCI codepoint, and the TCI codepoint may be associated with one or more TCI states, and each TCI state includes one or more QCL types and reference signals corresponding to each QCL type.

Specifically:
(1) Optionally, for SDM 1c, the TCI codepoint indicated by the TCI indication information is associated with multiple TCI states, and the QCL types included in the multiple TCI states are the same or different. The layer/DMRS port of the PDSCH has a QCL relationship with each reference signal indicated by these TCI states with respect to the QCL type corresponding to each reference signal. Optionally, all layer/DMRS ports of the PDSCH have a QCL relationship with each reference signal indicated by these TCI states with respect to the QCL type corresponding to each reference signal. Optionally, any layer/DMRS port of the PDSCH has a QCL relationship with each reference signal indicated by these TCI states with respect to the QCL type corresponding to each reference signal. Optionally, at least two TCI states in the plurality of TCI states include one same QCL type. The layer/DMRS port of the PDSCH and the reference signal corresponding to the one same QCL type included in the at least two TCI states have a QCL relationship with respect to the one same QCL type.

Wherein, the QCL types included in the multiple TCI states are the same or different:
Optionally, the QCL types included in at least two TCI states among the multiple TCI states correspond to at least one same large-scale parameter of channel. For example, one of the two TCI states includes QCL type A in one TCI state, and the channel large-scale parameter corresponding to QCL type A are {average delay, delay spread, Doppler frequency shift, Doppler spread}, and the other TCI state includes QCL type B, and the channel large-scale parameter corresponding to QCL type B are {Doppler frequency shift, Doppler spread}. Since the QCL types included in these two TCI states both correspond to Doppler shift and Doppler extension, that is, there are two same large-scale parameters of channel, so it is satisfied that "the QCL type included in at least two TCI states in multiple TCI states correspond to at least one same large-scale parameter of channel".

For another example, one of the two TCI states only includes QCL type B, and the large-scale parameter of channel corresponding to QCL type B is {Doppler frequency shift, Doppler spread}, and the other TCI state only includes QCL type D. The large-scale parameter of channel corresponding to QCL type D is {spatial receiving parameter}. Since the QCL types included in these two TCI states all correspond to different channel large-scale parameter, it does not satisfy that "the QCL types included in at least two of the multiple TCI states correspond to at least one same large-scale parameter of channel."

(2) Optionally, for SDM 1c, the TCI codepoint indicated by the TCI indication information is associated with one or more TCI states, where a certain QCL type included in at least one TCI state corresponds to multiple reference signals. A layer/DMRS port of the PDSCH has a QCL relationship with multiple reference signals corresponding to the QCL type with respect to the QCL type. Optionally, all layer/DMRS ports of the PDSCH have a QCL relationship with multiple reference signals corresponding to the QCL type with respect to the QCL type. Optionally, any layer and/or DMRS port of the PDSCH has a QCL relationship with multiple reference signals corresponding to the QCL type with respect to the QCL type.

The solutions provided by the embodiments of the present disclosure mainly involve: configuration (corresponding to the above transmission mode configuration information) according to signaling (RRC signaling, medium access control unit MAC-CE signaling or downlink control information DCI), DMRS Port configuration of PDSCH (corresponding to the above-mentioned DMRS port indication information, including QCL indication information, the QCL indication information can indicate QCL type information, and/or number information of the TCI state; the configuration here can also be information indicated by DCI signaling; for example scheduling the antenna port indicated in the DCI of the PDSCH; the configuration here may be information indicated by one signaling or multiple signalings, for example, a part of the information is indicated by RRC signaling, and another part of the information is indicated by DCI), the network device determines the time domain resource allocation TDRA indication of PDSCH (corresponding to the above TDRA indication information) and/or the indication information that whether the UE is in the high-speed train scenario and/or the frequency pre-compensation scenario (corresponding to the above scenario indication information) is SDM 1c (can also be understood as determining whether the transmission scheme of the first signal to be adopted is SDM 1c).

Specifically, it can be implemented by using at least one of the following methods to determine whether it is SDM 1c (about "associated with at least 2 TCI states", take the corresponding TCI codepoint including 2 or more TCI states as an example, the parameters of the above-mentioned second transmission scheme is taken the configuration of the number of repetitions of TDM 4 as an example, the transmission mode is taken repeated transmission mode as an example, and the signaling is taken the RRC signaling as an example):
Mode 1 (determined according to the configuration of the DMRS port of the PDSCH and the TDRA indication on the PDSCH): If the TDRA field of the DCI scheduling the PDSCH does not indicate the configuration including the number of repetitions of TDM 4 (it can also be understood as the configuration parameter of TDM 4 ), the TCI codepoint corresponding to the PDSCH (and/or the DMRS port of the PDSCH) includes 2 or more TCI states, and all DMRS ports of the PDSCH are in a CDM group, then the transmission of the PDSCH is SDM 1c transmission scheme.

Mode 2 (determined according to the configuration of RRC signaling): If the RRC parameter used to indicate the repeated transmission mode of PDSCH (for example, the RRC parameter RepetitionScheme (repetition scheme)-r16, "RepetitionScheme-r16" can also be called "RepetitionScheme", "RepetitionScheme-r16" is taken as an example, the repeated transmission mode can also be the multi-transmission point M-TRP transmission mode) is configured as the value corresponding to SDM 1c, then the transmission of the PDSCH is the transmission scheme of SDM 1c.

Mode 3 (determined according to the configuration of RRC signaling): If the RRC parameter used to indicate the repeated transmission mode of PDSCH (for example, the RRC parameter RepetitionScheme-r16) is configured as the value corresponding to SDM 1c, and the TCI codepoint corresponding to the PDSCH includes 2 or more TCI states, the transmission of the PDSCH is the transmission scheme of SDM 1c.

Optionally, the UE also determines whether it is SDM 1a in the following method:
If the TDRA field of the DCI scheduling the PDSCH does not indicate the RRC parameters including the configuration corresponding to the number of repetitions of TDM 4 and used to indicate the repetition transmission mode of the PDSCH (for example, the RRC parameter RepetitionScheme-r16) is not configured as the value corresponding to SDM 1c, the TCI codepoint corresponding to the PDSCH includes 2 TCI states, and the DMRS port of the PDSCH is in 2 CDM groups, then the transmission of the PDSCH is the transmission scheme of SDM 1a.

Mode 4 (determined according to the configuration of RRC signaling and the configuration of the DMRS port of PDSCH): If the RRC parameter used to indicate the repeated transmission mode of PDSCH (for example, RRC parameter RepetitionScheme (repetition scheme) -r16) is configured as the value corresponding to SDM 1c, and the TCI codepoint corresponding to the PDSCH includes 2 or more TCI states, and all DMRS ports of the PDSCH are in one CDM group, then the transmission of the PDSCH is the transmission scheme of SDM 1c.

Mode 5 (determined according to the configuration of the DMRS port of the PDSCH): If the TCI codepoint corresponding to the PDSCH includes at least one TCI state that meets the following conditions, the transmission of the PDSCH is the transmission scheme of SDM 1c;

Condition: At least one QCL type is associated with multiple reference signals.

Mode 6 (determined according to the TDRA indication of PDSCH and the configuration of the DMRS port of PDSCH): If the TDRA field of the DCI scheduling PDSCH does not indicate the configuration corresponding to the number of repetitions of TDM 4, and the TCI codepoint corresponding to the PDSCH includes one TCI state that satisfies the following conditions, then the transmission of the PDSCH is the transmission scheme of SDM 1c;
Condition: At least one QCL type is associated with multiple reference signals.

For example, TCI state 1:
QCL_type (QCL type) 1: RS (reference signal) 1, RS2;
QCL_type 2: RS3 RS4;
It can be understood that at least one QCL_type corresponds to two RSs.

Mode 7 (determined according to the configuration of the DMRS port of PDSCH, where the QCL type information and the number of TCI states are specifically used): If the TCI codepoint indicated by the network device for PDSCH includes 2 or more TCI states, A QCL type included in the one of the TCI states (which can be understood as one of the QCL types included in the TCI state) is {average delay average delay, delay spread} (corresponding to the first type, the TCI state can also include other QCL type), a QCL type included in another TCI state is {average delay, delay spread, Doppler shift, Doppler spread} (corresponding to the second type above, TCI state can also include other QCL types), then the transmission of the PDSCH is the transmission scheme of SDM 1c.

Mode 8 (determined according to the configuration of the DMRS port of PDSCH): If the TCI codepoint indicated by the network device for PDSCH includes 2 or more TCI states, a QCL types included in one TCI state is {average delay, delay spread} (corresponding to the first type, TCI state can also include other QCL types), a QCL type included in another TCI state is {Doppler shift, Doppler spread} (corresponding to the third type, TCI state can also include other QCL type), then the transmission of the PDSCH is the transmission scheme of SDM 1c.

Mode 9 (determined according to the configuration of the DMRS port of PDSCH): If the TCI codepoint indicated by the network device for PDSCH includes 2 or more TCI states, a QCL type included in one TCI state is {delay spread} (corresponding to the first type, the TCI state can also include other QCL types), a QCL type included in another TCI state is {Doppler shift, Doppler spread} (corresponding to the third type, the TCI state can also include other QCL types ), then the transmission of the PDSCH is the transmission scheme of SDM 1c.

Mode 10 (determined according to the configuration of the DMRS port of PDSCH): If the TCI codepoint indicated by the network device for PDSCH includes 2 or more TCI states, both TCI states include the reference signal corresponding to the QCL type {average delay, delay spread, Doppler shift, Doppler spread} (corresponding to the second type), and determine the UE uses a certain rule (corresponding to the first rule) to determine which large-scale parameter of the channel of the DMRS port (corresponding to the reference signal having a QCL relationship with the DMRS port with respect to the large-scale parameter of the channel frequency characteristic is determined according to the first rule), then the transmission of the PDSCH is the transmission scheme of SDM 1c. The large-scale parameter of the channel include receiving spatial parameters (such as receiving beams), and/or average gain, and/or average delay, and/or delay spread, and/or Doppler shift, and/or Doppler spread. The frequency large-scale parameter of the channel include Doppler shift and/or Doppler spread, and the channel delay characteristic large-scale parameter include average delay and/or delay spread.

Mode 11 (determined according to whether the UE is in the high-speed train scenario and/or frequency pre-compensation scenario, and the configuration of the DMRS port of PDSCH): If the network device indicates that the UE is in the high-speed train scenario and/or frequency pre-compensation scenario, and the TCI codepoint indicated by the network device for PDSCH includes 2 or more TCI states, then the transmission of the PDSCH is the transmission scheme of SDM 1c.

Of course, it is also possible to determine whether it is the SDM 1c transmission scheme only according to whether the UE is in the high-speed train scenario and/or the frequency pre-compensation scenario: if the network device indicates that the UE is in the high-speed train scenario and/or the frequency pre-compensation scenario, then the transmission of the PDSCH is the transmission scheme of SDM 1c; it is not limited here.

In the embodiment of the present disclosure, the corresponding content of determining the downlink frequency (corresponding to the frequency of the downlink signal) or the uplink frequency (corresponding to the transmission frequency of the uplink signal) may be as follows:
The network device sends to the UE indication information indicating that the UE is in a high-speed train scenario (corresponding to the above scenario indication information) or indication information for the network device to perform frequency pre-compensation of downlink signals;
The UE determines, according to the indication information, a reference signal for determining a downlink carrier frequency (that is, a downlink frequency), and/or a channel estimation algorithm for a downlink signal.

Wherein, the UE determines the reference signal used to determine the downlink carrier frequency according to the indication information in the following modes:
Mode 1: When the indication information indicates that the UE is in a high-speed train scenario or instructs the network device to perform frequency pre-compensation of the downlink signal, the UE determines the downlink carrier frequency according to the reference signal used to determine the Doppler shift of the downlink signal.

The UE also receives the TCI indication information sent by the network device to indicate the QCL type of the downlink signal and the QCL reference signal (the TCI indication information may be included in the DMRS port indication information), and the TCI indication information includes one or more TCI states; when the indication information indicates that the UE is in a high-speed train scenario or instructs the network device to perform downlink signal frequency pre-compensation, the UE determines TCI indication information indicated by the network device for the downlink signal, and determines the reference signal of the downlink carrier frequency based on the content indicated by the TCI indication information.

Mode 1-1: If the TCI indication information indicates that the CORESET (control resource set) corresponding to the PDCCH is associated with N TCI states, and only one TCI state in the N TCI states includes a reference signal for determining the Doppler shift of the PDSCH, the UE determines the downlink carrier frequency according to the reference signal used to determine the Doppler shift of the PDSCH. N is an integer greater than 1.

Mode 1-2: If the TCI indication information indicates that the same DMRS port of the PDSCH is associated with N TCI states, and only one TCI state in the N TCI states includes the reference signal used to determine the Doppler shift of the PDSCH, then the UE determines the reference signal of the downlink carrier frequency according to the reference signal used to determine the Doppler shift of the PDSCH. N is an integer greater than 1.

Wherein: mode 1-1 and mode 1-2 may be in an and/or relationship, if it is an "and" relationship, as long as one of "the TCI indication information indicates that the CORESET corresponding to the PDCCH is associated with N TCI states, and only one of the N TCI states includes the reference signal used to determine the Doppler shift of the PDSCH" and "If the TCI indication information indicates that the same DMRS port of the PDSCH is associated with N TCI states, and only one of the N TCI states includes the reference signals used to determine the Doppler shift of the PDSCH" is met, the UE determines the reference signal of the downlink carrier frequency according to the reference signal used to determine the Doppler shift of the PDSCH.

Mode 1-3: If the TCI indication information indicates that the CORESET corresponding to the PDCCH is associated with N TCI states, and multiple TCI states in the N TCI states include the reference signal used to determine the Doppler shift of the PDSCH, then the UE determines the downlink carrier frequency according to the reference signal used to determine the Doppler shift of the PDSCH in a specific TCI state. N is an integer greater than 1.

The specific TCI state may be a pre-agreed TCI state or a TCI state indicated by a network device. For example, for the first TCI state. Another example is the second TCI state.

Mode 1-4: If the TCI indication information indicates that the same DMRS port of the PDSCH is associated with N TCI states, and multiple TCI states in the N TCI states includes the reference signal used to determine the Doppler shift of the PDSCH, the UE determines the reference signal of the downlink carrier frequency according to the reference signal used to determine the Doppler shift of the PDSCH in a specific TCI state

The specific TCI state may be a pre-agreed TCI state or a TCI state indicated by a network device. For example, for the first TCI state. Another example is the second TCI state.

Optionally, the UE also determines the transmission frequency of the uplink signal according to the receiving frequency corresponding to the reference signal used to determine the downlink carrier frequency.

Optionally, the network device determines the frequency pre-compensation value of the downlink signal according to the uplink signal. The network device may perform frequency pre-compensation on the downlink signal by using the frequency pre-compensation value, and then send the downlink signal to the UE.

Mode 2: When the indication information indicates that the UE is in a high-speed train scenario or instructs the network device to perform frequency pre-compensation of downlink signals, the UE determines the downlink carrier frequency according to the reference signal used to determine the transmission frequency of the uplink signal.

Optionally, the network device sends the indication information of the reference signal used to determine the transmission frequency of the uplink signal to the UE. Optionally, the uplink signal is a non-specific type of reference signal, and the indication information of the reference signal used to determine the transmission frequency of the uplink signal is an indication information applicable to multiple uplink signals. Optionally, the uplink signal is a specific type of signal. For example, SRS (Sounding Reference Signal).

The reference signal used to determine the transmission frequency of the uplink signal is a downlink signal. It can be CSI-RS (Channel State Information-Reference Signal), SSB (Synchronization Signal Block), DMRS, etc. When it is a CSI-RS, it may be a CSI-RS used for beam management, a CSI-RS obtained by downlink CSI, or a Tracking Reference Signal (TRS).

Optionally, the indication information is TCI indication information, and the TCI indication information includes one or more TCI states, wherein a QCL type included in a TCI state is a transmission frequency, and the reference signal corresponding to the QCL type is a downlink signal, which can be CSI-RS, SSB, DMRS, etc. When it is a CSI-RS, it may be a CSI-RS used for beam management, a CSI-RS obtained by downlink CSI, a TRS, and the like.

Optionally, the UE determines the downlink carrier frequency according to the reference signal indicated by the indication information of the reference signal used to determine the transmission frequency of the uplink signal; optionally, the indication information indicates that the UE is in a high-speed train scenario or instructs the network device to perform downlink signal frequency pre-compensation, the UE determines the downlink carrier frequency according to the reference signal indicated by the indication information of the reference signal used to determine the transmission frequency of the uplink signal.

Wherein, the UE determines the channel estimation algorithm of the downlink signal according to the indication information by the following modes:
Mode 1: When the indication information indicates that the UE is in the high-speed train scenario or instructs the network device to perform frequency pre-compensation for downlink signals (corresponding to indicating that the UE is in the high-speed train scenario or frequency pre-compensation scenario), the UE determines that any DMRS port of the downlink signal is associated with all the TCI states indicated by the network device for the downlink signal (it can be one TCI state or multiple TCI states, which can be indicated by the TCI field in the DCI for scheduling downlink signal), and the UE performs channel estimation of the downlink signal based on the TCI state indicated by the network device for the downlink sigal.

Specifically, it can be:
Mode 1-1:
The network device indicates to the UE that the downlink signal is associated with two TCI states, where a QCL type included in one TCI state is {average delay, delay spread}, and a QCL type included in the other TCI state is {average delay, delay spread}, Doppler shift, Doppler spread}.

When the UE determines the channel delay characteristic of the downlink signal according to the reference signal indicated by the TCI state whose QCL type is {average delay, delay spread} and the reference signal indicated by the TCI state whose QCL type is {average delay, delay spread, Doppler shift, Doppler spread}; determine the Doppler characteristics of the channel of the downlink signal according to the reference signal indicated by the TCI state whose QCL type is {average delay, delay spread, Doppler shift, Doppler spread}; perform channel estimation of the downlink signal according to the delay characteristics and Doppler characteristics.

### Mode 1-2:

The network device indicates to the UE that the downlink signal is associated with two TCI states, where a QCL type included in one TCI state is {average delay, delay spread}, and a QCL type included in the other TCI state is {Doppler shift, Doppler spread}.

The UE determines the delay characteristics of the channel of the downlink signal according to the reference signal indicated by the TCI state whose QCL type is {average delay, delay spread}; determines the Doppler characteristics of the channel the downlink signal according to the reference signal indicated by the TCI state whose QCL type is {average delay, Doppler spread}; perform channel estimation of the downlink signal according to the delay characteristics and Doppler characteristics.

### Mode 1-3:

The network device indicates to the UE that the downlink signal is associated with two TCI states, wherein a QCL type included in one TCI state is {delay spread}, and a QCL type included in the other TCI state is {Doppler shift, Doppler spread}.

The UE determines the delay characteristics of the channel of the downlink signal according to the reference signal indicated by the TCI state whose QCL type is {delay spread}; determines the Doppler characteristics of the channel of the downlink signal according to the reference signal indicated by the TCI state whose QCL type is {Doppler shift, Doppler spread}: perform channel estimation of the downlink signal according to the delay characteristics and Doppler characteristics.

### Mode 1-4:

The network device indicates to the UE that the downlink signal is associated with two TCI states, and both TCI states include QCL types {average delay, delay spread, Doppler shift, Doppler spread}.

The UE jointly determines the delay characteristics of the channel of the downlink signal according to the reference signals whose QCL type is {average delay, delay spread, Doppler shift, Doppler spread} in two TCI states; determines the Doppler characteristic of the channel of the downlink signal according to the reference signal whose QCL type in a specific TCI state is {average delay, delay spread, Doppler shift, Doppler spread}; perform channel estimation of the downlink signal according to the delay characteristic and the Doppler characteristic. The specific TCI state may be a pre-agreed TCI state or a TCI state indicated by a network device, such as the first TCI state or the second TCI state.

### Mode 1-5:

The network device indicates to the UE that the downlink signal is associated with two TCI states, and both TCI states include QCL types {average delay, delay spread, Doppler shift, Doppler spread}.

The UE jointly determines the delay characteristics of the channel of the downlink signal according to the reference signals whose QCL type is {average delay, delay spread, Doppler shift, Doppler spread} in two TCI states; jointly determines the Doppler characteristic of the channel of the downlink signal according to the reference signal whose QCL type in a specific TCI state is {average delay, delay spread, Doppler shift, Doppler spread}; perform channel estimation of the downlink signal according to the delay characteristic and the Doppler characteristic.

Optionally, when the network device indicates the indication information that the UE is in a high-speed train scenario, and the network device indicates to the UE that the downlink signal is associated with one TCI state, the UE uses an enhanced algorithm for the High Speed Transmission (HST) scenario to perform channel estimation of the downlink signal.

The solutions provided by the embodiments of the present disclosure are described below with examples, and the network device is taken as a base station as an example:
Example 1 corresponding to the above mode 1: specifically, dynamically determine whether it is the transmission mode of the SDM 1c through DCI signaling.

In this solution, the transmission solution of SDM 1c also includes: All DMRS ports of PDSCH are in the same CDM group.

SDM 1c is determined by:
If there is no indication corresponding to RepetitionNumber-r16 configuration in the TDRA field of the DCI that schedules the PDSCH (a specific example of the repetition number of TDM 4 above), the TCI codepoint corresponding to the PDSCH includes 2 or more TCI states, and the all DMRS ports of the PDSCH are in one CDM group, then the transmission of the PDSCH is the transmission scheme of SDM 1c.

Implementation 1 based on example 1: the base station instructs the UE to receive the PDSCH through the DCI.

The UE determins whether the TDRA field in the DCI indicates the PDSCH-TimeDomainResourceAllocation (time domain resource allocation)-r16 (r16 may or may not be available) configuration corresponding to RepetitionNumber-r16, and determines the number of the TCI states corresponding to the TCI codepoint indicated in the TCI field in the DCI and the CDM group where the DMRS port indicated by the antenna port field in the DCI belongs. If the TDRA field of the DCI that schedules the PDSCH does not indicate the configuration corresponding to RepetitionNumber-r16, the number of TCI states corresponding to the TCI codepoint is 2, and all DMRS ports indicated by the antenna port field are in a CDM group (can be obtained from the DMRS port indication information), the UE determines that the transmission mode of the PDSCH is SDM 1c, that is, there is only one PDSCH transmission occasion, and the DMRS port of the PDSCH on the time-frequency resource corresponding to the PDSCH transmission occasion is associated with all TCI states corresponding the TCI codepoint. Wherein, "including RepetitionNumber-r16" is a specific implementation of "corresponding to RepetitionNumber-r16", which is not limited here.

The UE receives the PDSCH according to the determined transmission mode of the PDSCH.

Optionally, the UE determines each transmission scheme according to the following conditions:
The number of TCI states included in the indicated TCI codepoint
The number of CDM groups for DMRS ports
Whether the UE is configured with RepetitionNumber-r16
(Number of repeated transmissions) Whether the UE is configured with RepetitionS cheme-r16
(Transmission scheme configuration) UE Behavior
(UE behavior)
1 ≥ 1 Yes, and the configuration corresponding to RepetitionNumber-r16 is not indicated in the TDRA field of DCI / No No Basic transmission scheme
1 1 Yes, and the configuration corresponding to RepetitionNumber-r16 is indicated in the TDRA field of DCI No TDM4 fallback mode
2 1 Yes, and the configuration corresponding to RepetitionNumber-r16 is indicated in the TDRA field of DCI No TDM 4
2 1 Yes, and the configuration corresponding to RepetitionNumber-r16 is not indicated in the TDRA field of DCI No SDM 1c
2 2 Yes, and the configuration corresponding to RepetitionNumber-r16 is not indicated in the TDRA field of DCI No SDM 1a
2 2 No Yes or No SDM 1a
2 1 No No SDM 1c
2 1 No Yes, and 'TDMSchemeA' FDM 2a
2 1 No Yes, and 'FDMSchemeB' FDM 2b
2 1 No Yes, and 'TDMSchemeA' TDM 3

Based on the above, a possible process for the UE to determine each transmission scheme is shown in FIG. 4, where:
The UE determines the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
1. If it is 1, the UE determines whether the TDRA field ("Time domain resource assignment' field) in the DCI that schedules the PDSCH indicates the configuration that includes the number of retransmissions corresponding to TDM 4 (for example, the RRC parameter repetitionNumber-r16);
   (1) If configured, the fallback transmission scheme for TDM 4;
   (2) Otherwise, it is the basic transmission scheme;
2. If > 1 (for example, 2), the UE determines the number of CDM groups where the DMRS port of the PDSCH is located;
   (1) If it is 2, it is determined whether the TDRA in the DCI indicates the configuration including the number of retransmissions corresponding to TDM 4, if not, it is SDM 1a, if yes, do not perform the operation or the terminal thinks this is an error case;
   (2) If it is 1, the UE determines whether the TDRA in the DCI indicates the number of retransmissions corresponding to TDM 4, if yes, it is TDM 4, if not, determines whether there is a parameter used to indicate the repeated transmission scheme (for example, RRC parameter RepetitionScheme-r16);

   1) SDM 1c if there is no such parameter;
   2) If there is such parameter, determine the specific transmission scheme according to the value of this parameter:
      If FDM 2a is indicated (for example, the value of the RRC parameter RepetitionScheme-r16 is FDMSchemeA), it is FDM 2a;
      If FDM 2b is indicated (for example, the value of the RRC parameter RepetitionScheme-r16 is FDMSchemeB), it is FDM 2b;
      If TDM 3 is indicated (for example, the value of RRC parameter RepetitionScheme-r16 is TDMSchemeA), it is TDM 3.

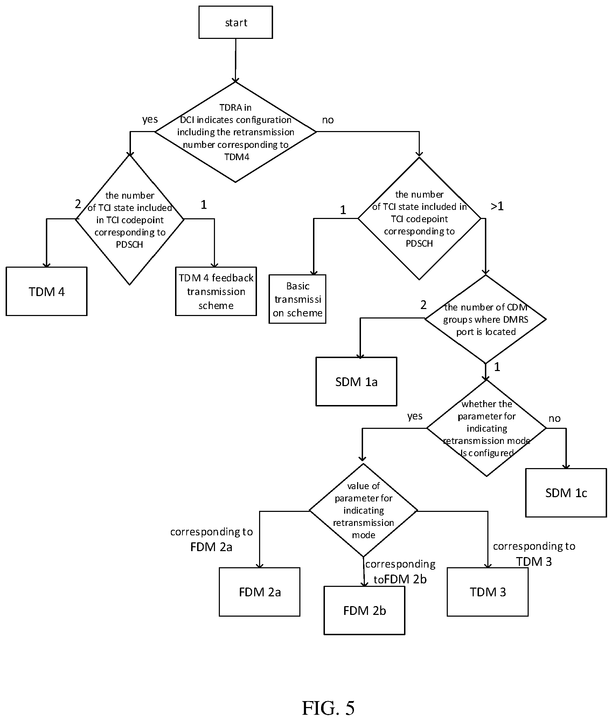

Another possible process for the UE to determine each transmission scheme is shown in FIG. 5, where:
The UE determines whether the TDRA field ("Time domain resource assignment' field) in the DCI for scheduling PDSCH indicates the configuration including the number of retransmissions corresponding to TDM 4 (for example, the RRC parameter repetitionNumber-r16);
1. If configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If 2, then TDM 4;
   (2) If it is 1, it is the fallback transmission scheme of TDM 4;
2. If not configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If it is 1, it is the basic transmission scheme;
   (2) Otherwise, the UE determines the number of CDM groups where the DMRS port of the PDSCH is located:
      1) If 2, then SDM 1a;
      2) If it is 1, the UE determines whether there is a parameter used to indicate the repeated transmission scheme (for example, the RRC parameter RepetitionScheme-r16):
         SDM 1c if there is no such parameter;
         If there is such parameter, determine the specific transmission scheme according to the value of this parameter:
            If FDM 2a is indicated (for example, the value of the RRC parameter RepetitionScheme-r16 is FDMSchemeA), it is FDM 2a;
            If FDM 2b is indicated (for example, the value of the RRC parameter RepetitionScheme-r16 is FDMSchemeB), it is FDM 2b;
            If TDM 3 is indicated (for example, the value of RRC parameter RepetitionScheme-r16 is TDMSchemeA), it is TDM 3.

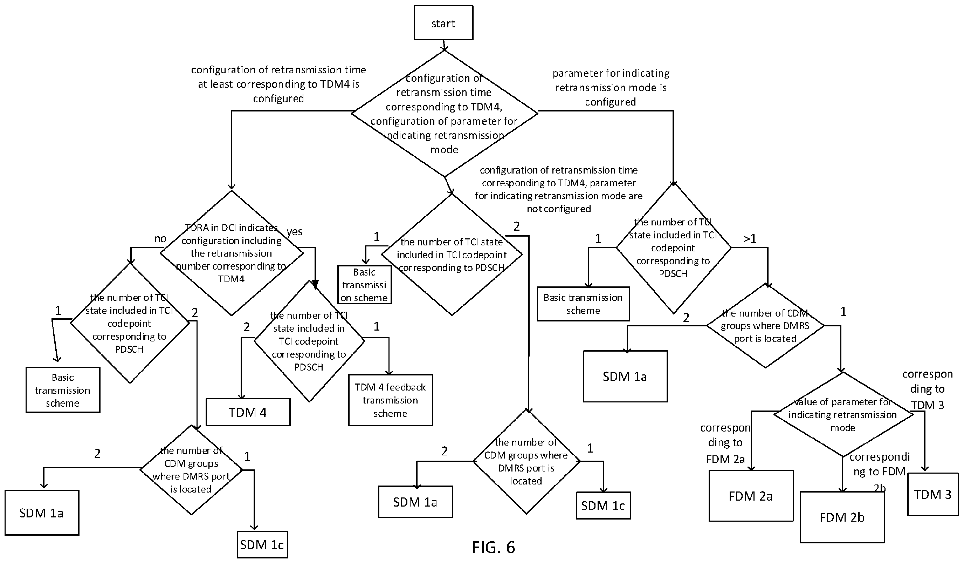

Another possible process for the UE to determine each transmission scheme is shown in FIG. 6, where:
The UE determines whether there is a configuration of the number of retransmissions corresponding to TDM 4 in the RRC signaling (for example, whether there is an RRC parameter repetitionNumber-r16) or a parameter used to indicate a repeated transmission scheme (for example, the RRC parameter RepetitionScheme-r16);
1. If there is no parameter, then determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If it is 1, it is the basic transmission scheme;
   (2) If it is 2, determine the number of CDM groups where the DMRS port of PDSCH is located; if it is 1, it is SDM 1c; if it is 2, it is SDM 1a;
2. If there is a configuration of the number of retransmissions corresponding to TDM 4 (for example, there is an RRC parameter repetitionNumber-r16); then determine whether the TDRA field ("Time domain resource assignment' field) in the DCI for scheduling PDSCH indicates that it includes configuration of the number of retransmissions corresponding to TDM 4 (for example, the RRC parameter repetitionNumber-r16):
   (1) Yes, then determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If 2, then TDM 4;
      2) If it is 1, it is the fallback transmission scheme of TDM 4;
   (2) If not, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If it is 1, it is the basic transmission scheme;
      2) If it is 2, determines the number of CDM groups where the DMRS port of PDSCH is located; if it is 1, it is SDM 1c; if it is 2, it is SDM 1a;
3. If there is a parameter used to indicate the repeated transmission scheme, the UE determines the number of TCI states included in the TCI codepoint corresponding to the PDSCH (optionally, the TCI codepoint corresponding to the PDSCH is indicated by the 'Transmission Configuration Indication' field in the DCI for scheduling the PDSCH):
   (1) If it is 1, it is the basic transmission scheme;
   (2) If > 1, such as 2, the UE determines the number of CDM groups where the DMRS port of the PDSCH is located:
      1) If 2, it is SDM 1a.
      2) If it is 1, it is determined that there is a value of a parameter indicating a repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of the RRC parameter RepetitionScheme-r16 is TDMSchemeA), it is TDM 3.

Example 2 corresponding to the above mode 4: in this solution, the transmission scheme of SDM 1c further includes: all DMRS ports of the PDSCH are in the same CDM group.

The indication of SDM 1c multiplexes the RRC parameter (for example, RRC parameter RepetitionScheme-r16) used to indicate the repeated transmission mode of PDSCH, that is, a candidate value for this parameter is added, for example, the candidate value SDMSchemeA or SDMSchemeC are added.

That is, the determination method of SDM 1c is:
If the RRC parameter used to indicate the repeated transmission mode of PDSCH (for example, RRC parameter RepetitionScheme-r16) is configured as the value corresponding to SDM 1c, and the TCI codepoint corresponding to the PDSCH includes 2 or more TCI states, and the all DMRS ports of the PDSCH are in one CDM group, then the transmission of the PDSCH is the transmission scheme of SDM 1c.

### Implementation 2 based on example 2:

The base station instructs the UE to receive the PDSCH through the DCI.

The UE determines whether there is a parameter indicating the repeated transmission mode of the PDSCH in the RRC signaling, and determines the number of TCI states corresponding to the TCI codepoint indicated by the TCI field in the DCI and the CDM group where the DMRS port indicated by the antenna port field in the DCI is located. If there is a parameter used to indicate the repeated transmission mode of PDSCH and the parameter is configured as SDM 1c, the number of TCI states corresponding to the above TCI codepoint is 2, and all DMRS ports indicated by the antenna port field are in a CDM group, then the UE determines that the transmission mode of the PDSCH is SDM 1c, that is, there is only one PDSCH transmission occasion, and the DMRS port of the PDSCH on the time-frequency resource corresponding to the PDSCH transmission occasion is associated with all TCI states corresponding to the above TCI codepoint.

The UE receives the PDSCH according to the determined transmission mode of the PDSCH.

Optionally, the UE determines conditions for determining each transmission scheme are shown in the following table:
The number of TCI states included in the indicated TCI codepoint
The number of CDM groups of DMRS ports
Whether the UE is configured with RepetitionNumber-r16
(Number of repeated transmissions) Whether the UE is configured with RepetitionS cheme-r16
(Transmission scheme configuration) UE Behavior
(UE behavior)
1 ≥ 1 Yes, and the configuration corresponding to RepetitionNumber-r16 is not indicated in the TDRA field of DCI / No No Basic transmission scheme
1 1 Yes, and the configuration corresponding to RepetitionNumber-r16 is indicated in the TDRA field of DCI No TDM4 fallback mode
2 1 Yes, and the configuration corresponding to RepetitionNumber-r16 is indicated in the TDRA field of DCI No TDM 4
2 2 Yes, and the configuration corresponding to RepetitionNumber-r16 is not indicated in the TDRA field of DCI No SDM 1a
2 2 No Yes/No SDM 1a
2 1 No Yes, and 'TDMSchemeA' FDM 2a
2 1 No Yes, and 'FDMSchemeB' FDM 2b
2 1 No Yes, and 'TDMSchemeA' TDM 3
2 1 No Yes, and 'SDMSchemeA' (note, it may also be another value expression, in short, it is the value corresponding to SDM 1c) SDM 1c

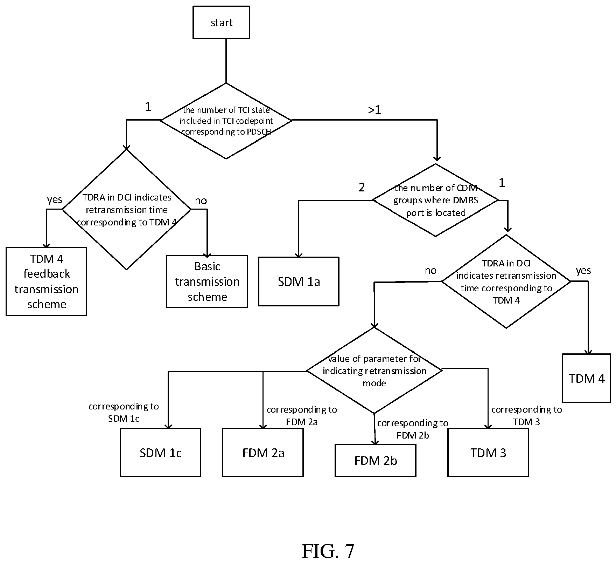

Based on the above, a possible process for the UE to determine each transmission scheme is shown in FIG. 7, where:
The UE determines the number of TCI states included in the TCI codepoint corresponding to the PDSCH (optionally, the TCI codepoint corresponding to the PDSCH is indicated by the 'Transmission Configuration Indication' field in the DCI scheduling the PDSCH):
1. If it is 1, the UE determines whether the TDRA field ("Time domain resource assignment' field) in the DCI that schedules the PDSCH indicates the configuration that includes the number of retransmissions corresponding to TDM 4 (for example, the RRC parameter repetitionNumber-r16) :
   (1) If configured, the fallback transmission scheme for TDM 4;
   (2) Otherwise, it is the basic transmission scheme;
2. If > 1 (for example, 2), the UE determines the number of CDM groups where the DMRS port of the PDSCH is located:
   (1) If 2, then SDM 1a;
   (2) If it is 1, the UE determines whether the TDRA field ("Time domain resource assignment' field) in the DCI that schedules the PDSCH indicates the configuration including the number of retransmissions corresponding to TDM 4 (for example, the RRC parameter repetitionNumber-r 16):
      1) If yes, TDM 4;
      2) If not, the UE determines the value of the parameter used to indicate the repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of RRC parameter RepetitionScheme-r16 is TDMSchemeA), it is TDM 3;
         If SDM 1c is indicated (for example, the value of RRC parameter RepetitionScheme-r16 is SDMSchemeA), then it is SDM 1c.

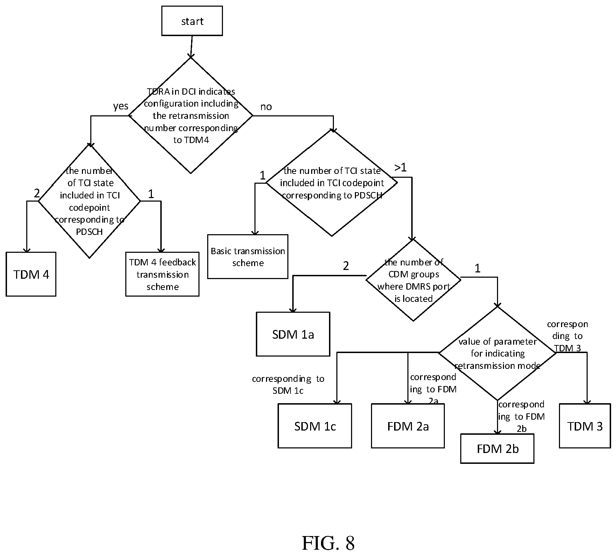

Another possible process for the UE to determine each transmission scheme is shown in FIG. 8, where:
The UE determines whether the TDRA field ("Time domain resource assignment' field) in the DCI for scheduling PDSCH indicates the configuration including the number of retransmissions corresponding to TDM 4 (for example, the RRC parameter repetitionNumber-r16):
1. If configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If 2, then TDM 4;
   (2) If it is 1, it is the fallback transmission scheme of TDM 4;
2. If not configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If it is 1, it is the basic transmission scheme;
   (2) Otherwise, the UE determines the number of CDM groups where the DMRS port of the PDSCH is located:
      1) If 2, then SDM 1a;
      2) If it is 1, it is determined that there is a value of a parameter indicating a repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of RRC parameter RepetitionScheme-r16 is TDMSchemeA), it is TDM 3;
         If SDM 1c is indicated (for example, the value of RRC parameter RepetitionScheme-r16 is SDMSchemeA), then it is SDM 1c.

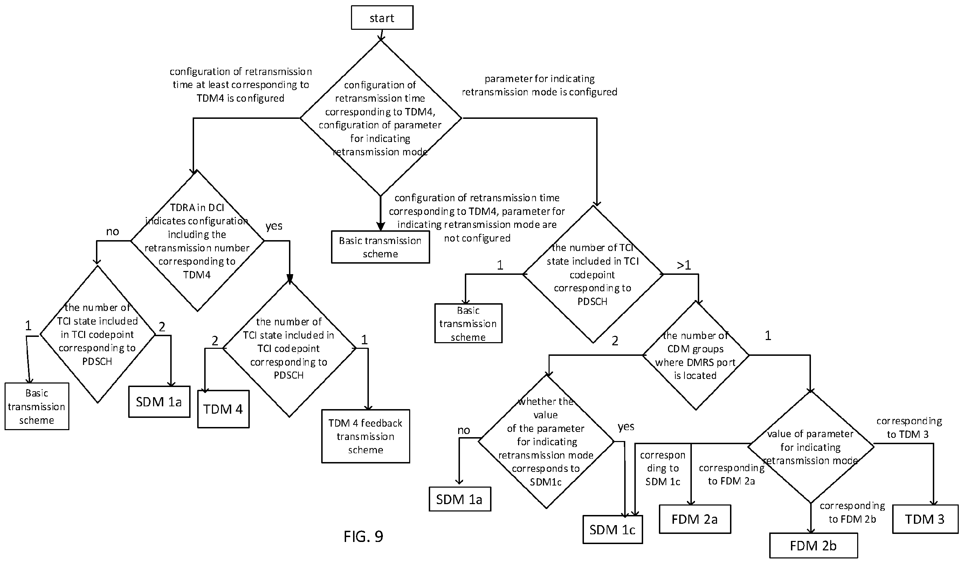

Another possible process for the UE to determine each transmission scheme is shown in FIG. 9, where:
The UE determines whether there is a configuration of the number of retransmissions corresponding to TDM 4 in the RRC signaling (for example, whether there is an RRC parameter repetitionNumber-r16) or a parameter used to indicate a repeated transmission scheme (for example, the RRC parameter RepetitionScheme-r16):
1. If there is no such parameter, it is the basic transmission scheme;
2. If there is a configuration of the number of retransmissions corresponding to TDM 4 (for example, there is an RRC parameter repetitionNumber-r16); then determine whether the TDRA field ("Time domain resource assignment' field) in the DCI for scheduling PDSCH indicates the configuration including the number of retransmissions corresponding to TDM 4 (for example, the RRC parameter repetitionNumber-r16):
   (1) Yes, then determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If 2, then TDM 4;
      2) If it is 1, it is the fallback transmission scheme of TDM 4;
   (2) If not, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If it is 1, it is the basic transmission scheme;
      2) If 2, then SDM 1a;
3. If there is a parameter used to indicate the repeated transmission scheme, the UE determines the number of TCI states included in the TCI codepoint corresponding to the PDSCH (optionally, the TCI codepoint corresponding to the PDSCH is indicated by the 'Transmission Configuration Indication' field in the DCI for scheduling the PDSCH):
   (1) If it is 1, it is the basic transmission scheme;
   (2) If > 1, such as 2, the UE determines the number of CDM groups where the DMRS port of the PDSCH is located:
      1) If it is 2, whether the value of the parameter used to indicate the repeated transmission mode corresponds to SDM 1c, if so, it is SDM 1c, otherwise, it is SDM 1a.
      2) If it is 1, it is determined that there is a value of a parameter indicating a repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of RRC parameter RepetitionScheme-r16 is TDMSchemeA), it is TDM 3;
         If SDM 1c is indicated (for example, the value of RRC parameter RepetitionScheme-r16 is SDMSchemeA), then it is SDM 1c.

Example 3 corresponding to the mode 3: Optionally, the transmission scheme of SDM 1c also includes: the same TB is transmitted through a PDSCH transmission occasion, and all DMRS ports of the PDSCH are associated with multiple TCI states included in the same TCI codepoint, all DMRS ports of the PDSCH occupy the same PRB (Physical resource block). Optionally, the multiple TCI states are specifically two TCI states.

The indication of SDM 1c multiplexes the RRC parameter (for example, RRC parameter RepetitionScheme-r16) used to indicate the repeated transmission mode of PDSCH, that is, a candidate value is added for this parameter, for example, the candidate value SDMSchemeA or SDMSchemeC are added.

That is, the determination method of SDM 1c is:
If the RRC parameter (for example, RRC parameter RepetitionScheme-r16) used to indicate the repetition transmission mode of the PDSCH is configured as a value corresponding to SDM 1c, the transmission of the PDSCH is the transmission scheme of SDM 1c.

Optionally, if the RRC parameter used to indicate the repeated transmission mode of PDSCH (for example, RRC parameter RepetitionScheme-r16) is configured as the value corresponding to SDM 1c, and the TCI codepoint corresponding to the PDSCH includes 2 or more TCI states, the transmission of the PDSCH is the transmission scheme of SDM 1c.

For the above, the UE can determine whether it is SDM 1a in the following modes:
If the TDRA field of the DCI that schedules PDSCH does not indicate the configuration corresponding to RepetitionNumber-r16 and the RRC parameter used to indicate the repeated transmission mode of PDSCH (for example, the RRC parameter RepetitionScheme-r16) is not configured as the value corresponding to SDM 1c, the TCI codepoint corresponding to the PDSCH includes 2 TCI states, and the DMRS ports of the PDSCH are in 2 CDM groups, then the transmission of the PDSCH is the transmission scheme of SDM 1a.

Implementation 3 based on example 3: The base station instructs the UE to receive the PDSCH through the DCI.

The UE determines whether there is a parameter used to indicate the repeated transmission mode of the PDSCH in the RRC signaling, and determines the number of TCI states corresponding to the TCI codepoint indicated by the TCI field in the DCI. If there is a parameter used to indicate the repeated transmission mode of PDSCH and the parameter is configured as SDM 1c, and the number of TCI states corresponding to the TCI codepoint is 2, then the UE determines that the transmission mode of PDSCH is SDM 1c, that is, there is only one PDSCH transmission occasion, and the DMRS port of the PDSCH on the time-frequency resource corresponding to the PDSCH transmission occasion is associated with all TCI states corresponding to the TCI codepoint.

The UE receives the PDSCH according to the determined transmission mode of the PDSCH.

Optionally, the conditions for the UE to determine each transmission scheme are shown in the following table:
The number of TCI states included in the indicated TCI codepoint
The number of CDM groups of DMRS ports
Whether the UE is configured with RepetitionNumber-r16
(Number of repeated transmissions) Whether the UE is configured with RepetitionScheme-r16
(Transmission scheme configuration) UE Behavior
(UE behavior)
1 ≥ 1 Yes, and the configuration corresponding to RepetitionNumber-r16 is not indicated in the TDRA field of DCI / No No Basic transmission scheme
1 1 Yes, and the configuration corresponding to RepetitionNumber-r16 is indicated in the TDRA field of DCI No TDM4 fallback mode
2 1 Yes, and the configuration corresponding to RepetitionNumber-r16 is indicated in the TDRA field of DCI No TDM 4
2 2 Yes, and the configuration corresponding to RepetitionNumber-r16 is not indicated in the TDRA field of DCI No SDM 1a
2 2 No Yes, and value does not correspond to SDM 1c (for example, 'SDMSchemeA') / No SDM 1a
2 1 No Yes, and 'TDMSchemeA' FDM 2a
2 1 No Yes, and 'FDMSchemeB' FDM 2b
2 1 No Yes, and 'TDMSchemeA' TDM 3
2 ≥ 1 No Yes, and it is the value corresponding to SDM 1c (for example, it is 'SDMSchemeA', or it may be another value expression) SDM 1c

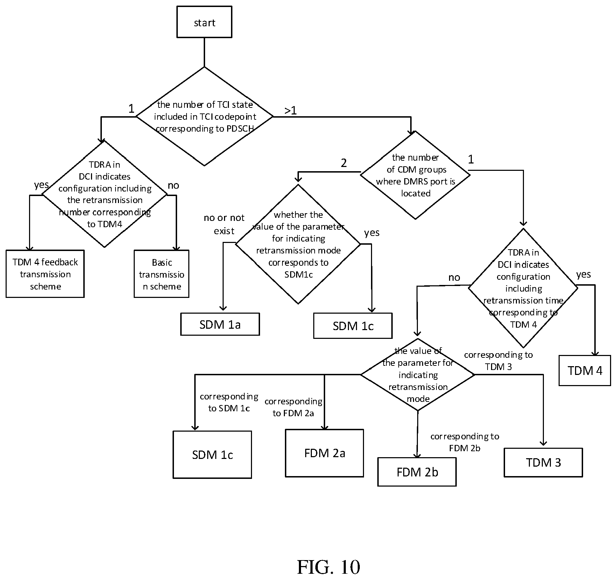

A possible process for the UE to determine each transmission scheme is shown in FIG. 10, where:
The UE determines the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
1. If it is 1, the UE determines whether the TDRA field ("Time domain resource assignment' field) in the DCI that schedules the PDSCH indicates the configuration that includes the number of retransmissions corresponding to TDM 4 (for example, the RRC parameter repetitionNumber-r16) :
   (1) If configured, the fallback transmission scheme for TDM 4;
   (2) Otherwise, it is the basic transmission scheme;
2. If > 1 (for example, 2), the UE determines the number of CDM groups where the DMRS port of the PDSCH is located:
   (1) If it is 2, the UE determines whether the value of the parameter used to indicate the repeated transmission scheme (for example, the RRC parameter RepetitionScheme-r16) corresponds to SDM 1c,
      1) Yes, for SDM 1c;
      2) No or there is no parameter used to indicate the repeated transmission scheme, which is SDM 1a;
   (2) If it is 1, the UE determines whether the TDRA in the DCI indicates the number of retransmissions corresponding to TDM 4; if yes, it is TDM3, if not, determines the content indicated by the value of the parameter of the retransmission scheme (for example, RRC parameter RepetitionScheme-r16):
      If FDM 2a is indicated (for example, the value of the RRC parameter RepetitionScheme-r16 is FDMSchemeA), it is FDM 2a;
      If FDM 2b is indicated (for example, the value of the RRC parameter RepetitionScheme-r16 is FDMSchemeB), it is FDM 2b;
      If TDM3 is indicated (for example, the value of RRC parameter RepetitionScheme-r16 is TDMSchemeA), it is TDM 3;
      If SDM 1c is indicated (for example, the value of RRC parameter RepetitionScheme-r16 is SDMSchemeA), then it is SDM 1c.

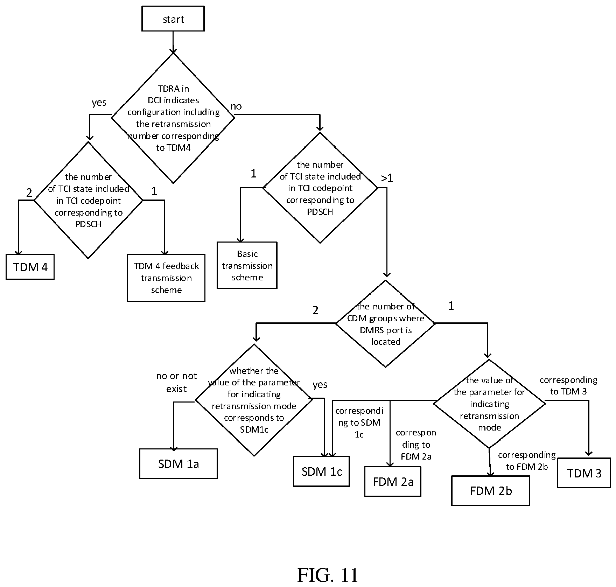

Another possible process for the UE to determine each transmission scheme is shown in FIG. 11, where:
The UE determines whether the TDRA field ("Time domain resource assignment' field) in the DCI for scheduling PDSCH indicates the configuration including the number of retransmissions corresponding to TDM 4 (for example, the RRC parameter repetitionNumber-r16):
1. If configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If 2, then TDM 4;
   (2) If it is 1, it is the fallback transmission scheme of TDM 4;
2. If not configured, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
   (1) If it is 1, it is the basic transmission scheme;
   (2) Otherwise, the UE determines the number of CDM groups where the DMRS port of the PDSCH is located:
      1) If it is 2, determine whether the value of the parameter used to indicate the repeated transmission scheme (for example, the RRC parameter RepetitionScheme-r16) corresponds to SDM 1c:
         If it corresponds to SDM 1c, it is SDM 1c;
         If it does not exist or the value does not correspond to SDM 1c, it is SDM 1a.
      2) If it is 1, it is determined that there is a value of a parameter indicating a repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of RRC parameter RepetitionScheme-r16 is TDMSchemeA), it is TDM 3;
         If SDM 1c is indicated (for example, the value of RRC parameter RepetitionScheme-r16 is SDMSchemeA), then it is SDM 1c.

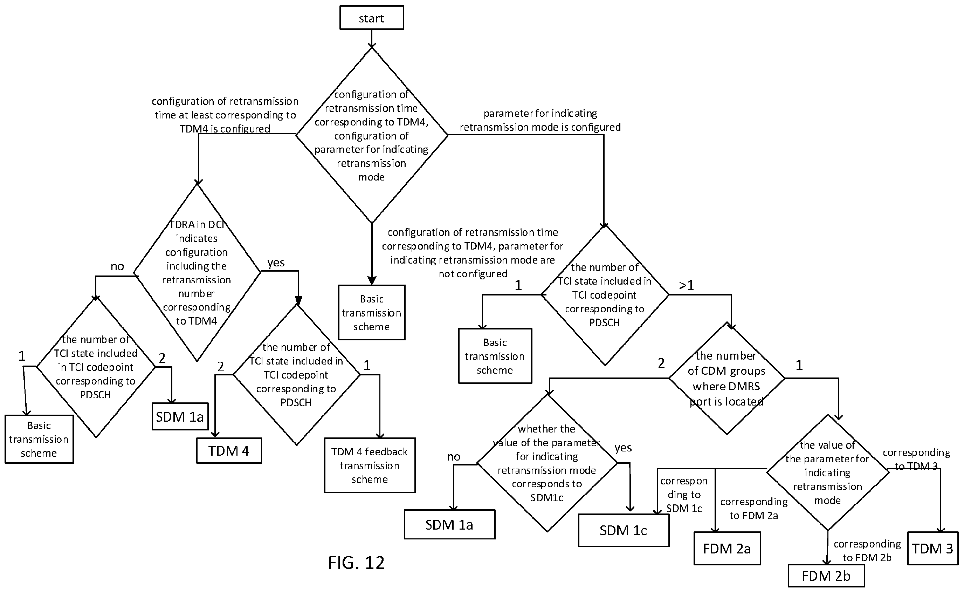

Another possible flow chart for UE to determine various transmission schemes is shown in FIG. 12, where:
The UE determines whether there is a configuration of the number of retransmissions corresponding to TDM 4 in the RRC signaling (for example, whether there is an RRC parameter repetitionNumber-r16) or a parameter used to indicate a repeated transmission scheme (for example, the RRC parameter RepetitionScheme-r16):
1. If there is no such parameter, it is the basic transmission scheme;
2. If there is a configuration of the number of retransmissions corresponding to TDM 4 (for example, there is an RRC parameter repetitionNumber-r16); then determine whether the TDRA field ("Time domain resource assignment' field) in the DCI for scheduling PDSCH indicates the configuration including the number of retransmissions corresponding to TDM4 (for example, the RRC parameter repetitionNumber-r16):
   (1) Yes, then determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If 2, then TDM 4;
      2) If it is 1, it is the fallback transmission scheme of TDM 4;
   (2) If not, determine the number of TCI states included in the TCI codepoint corresponding to the PDSCH (optionally, the TCI codepoint corresponding to the PDSCH is indicated by the 'Transmission Configuration Indication' field in the DCI that schedules the PDSCH):
      1) If it is 1, it is the basic transmission scheme;
      2) If 2, then SDM 1a;
3. If there is a parameter used to indicate the repeated transmission scheme, the UE determines the number of TCI states included in the TCI codepoint corresponding to the PDSCH (optionally, the TCI codepoint corresponding to the PDSCH is indicated by the 'Transmission Configuration Indication' field in the DCI for scheduling the PDSCH):
   (1) If it is 1, it is the basic transmission scheme;
   (2) If > 1, such as 2, the UE determines the number of CDM groups where the DMRS port of the PDSCH is located:
      1) If it is 2, determine whether the value of the parameter used to indicate the repeated transmission scheme (for example, the RRC parameter RepetitionScheme-r16) corresponds to SDM 1c:
         If it corresponds to SDM 1c, it is SDM 1c;
         If it does not exist or the value does not correspond to SDM 1c, it is SDM 1a.
      2) If it is 1, it is determined that there is a value of a parameter indicating a repeated transmission scheme (for example, the RRC parameter RepetitionScheme-r16):
         If FDM 2a is indicated (for example, the value of the RRC parameter RepetitionScheme-r16 is FDMSchemeA), it is FDM 2a;
         If FDM 2b is indicated (for example, the value of the RRC parameter RepetitionScheme-r16 is FDMSchemeB), it is FDM 2b;
         If TDM3 is indicated (for example, the value of RRC parameter RepetitionScheme-r16 is TDMSchemeA), it is TDM 3;
         If SDM 1c is indicated (for example, the value of RRC parameter RepetitionScheme-r16 is SDMSchemeA), then it is SDM 1c.

Example 4 corresponding to the modes 5 to 9: determine whether it is the transmission mode of SDM 1c according to the number of reference signals associated with the same QCL type in the TCI state.

Optionally, the transmission scheme of SDM 1c also includes: the same TB is transmitted through a PDSCH transmission occasion, the DMRS port of the PDSCH is in one or more CDM groups and occupies the same Physical resource block ( PRB), and the DMRS port of PDSCH is associated with the TCI state in the indicated TCI codepoint, and at least one QCL type in at least one TCI state is associated with two or more reference signals.

Optionally, in the transmission scheme of SDM 1c, only one TCI state is included in the TCI codepoint indicated by the PDSCH.

At this time, whether it is the SDM 1c scheme is determined by the configuration of the reference signal in the TCI state indicated by the PDSCH.

That is, the determination method of SDM 1c is one of the following:
The TCI codepoint corresponding to the PDSCH includes at least one TCI state that meets the following conditions, then the transmission of the PDSCH is the transmission scheme of SDM 1c: at least one QCL type is associated with multiple reference signals;
If the TDRA field of the DCI scheduling the PDSCH does not indicate the configuration corresponding to RepetitionNumber-r16, and the TCI codepoint corresponding to the PDSCH includes at least one TCI state that meets the following conditions, then the transmission of the PDSCH is the transmission scheme of SDM 1c: at least one QCL type is associated with multiple reference signals.

Implementation 4 based on example 4: the base station instructs the UE to receive the PDSCH through the DCI.

The UE determines the relationship between the QCL type in the TCI state corresponding to the TCI codepoint indicated by the TCI field in the DCI and the reference signal. If there is at least one QCL type associated with multiple reference signals, the UE determines that the transmission mode of the PDSCH is SDM 1c, that is, there is only one PDSCH transmission occasion, and the DMRS port of the PDSCH on the time-frequency resource corresponding to the PDSCH transmission occasion is associated with all TCI states corresponding to the TCI codepoint.

For example, a TCI state associated with the TCI codepoint indicated by the TCI field includes the following content: {QCL_type 1: RS1, RS2}, that is, QCL type 1 is associated with two reference signals, RS 1 and RS2; then the UE determines the transmission mode of the PDSCH is SDM 1c.

The UE receives the PDSCH according to the determined transmission mode of the PDSCH.

Implementation 5 based on example 4: the base station instructs the UE to receive the PDSCH through the DCI.

The UE determines whether the TDRA field in the DCI indicates the PDSCH-TimeDomainResourceAllocation-r16 configuration corresponding to the RepetitionNumber-r16, and determines the relationship between the QCL type in the TCI state corresponding to the TCI codepoint indicated by the TCI field in the DCI and the reference signal. If the TDRA field of the DCI that schedules the PDSCH does not indicate the configuration corresponding to RepetitionNumber-r16, and there is at least one QCL type associated with multiple reference signals, the UE determines that the transmission mode of the PDSCH is SDM 1c, that is, there is only one PDSCH transmission occasion, and on the time-frequency resource corresponding to the PDSCH transmission occasion, the DMRS port of the PDSCH is associated with all the TCI states corresponding to the above TCI codepoint.

The UE receives the PDSCH according to the determined transmission mode of the PDSCH.

In this example, each TCI state includes one or more QCL types, and each QCL type is associated with one or more reference signals.

A DMRS port is associated with a TCI state, which means that the channel that transmits the DMRS port and the large-scale parameter corresponding to a certain QCL type in the TCI state can be launched through the channel for transmitting the reference signal associated with the QCL type in the TCI state.

Some typical large-scale parameter include:
Doppler shift, Doppler spread, average delay, delay spread, average gain.

Exemplary 6 corresponding to the modes 5 to 9: determining whether it is an SDM 1c scheme by determining the QCL type indicated by the base station for the PDSCH.

Implementation 6 based on example 6:
The base station sends the scheduling information of the PDSCH to the terminal; and indicates the associated QCL reference signal to the PDSCH through the TCI field in the DCI. If the TCI codepoint indicated by the TCI field is associated with two TCI states, and one of the two TCI states includes at least the QCL type {average delay, delay spread} (can also include one or more other QCL types), the other of the two TCI states includes at least QCL type {average delay, delay spread, Doppler shift, Doppler spread} (and may also include one or more other QCL types), then the terminal determines that the transmission of the PDSCH is the transmission scheme of SDM 1c.

Examples 7 and 8: similar to example 6, but the QCL type corresponds to modes 8 and 9 respectively, and will not be repeated here.

### Example 9 corresponding to the modes 10-11:

The base station sends the scheduling information of the PDSCH to the terminal; and indicates the associated QCL reference signal to the PDSCH through RRC signaling, MAC-CE signaling or the TCI field in the DCI.

The base station indicates to the UE through RRC signaling, MAC-CE signaling or DCI signaling that the UE determines the channel characteristic corresponding to a specific large-scale parameter according to the reference signal in which TCI state. Optionally, the specific large-scale parameter is a frequency characteristic channel large-scale parameter. For example, Doppler shift and/or Doppler spread.

If the TCI codepoint indicated by the TCI field is associated with two TCI states, and both TCI states include at least the QCL type {average delay, delay spread, Doppler shift, Doppler spread}, then the terminal determines that the transmission of the PDSCH is SDM 1c transmission scheme.

### Example 10 corresponding to the mode 11:

The base station indicates to the UE whether the UE is in a high-speed train scenario.

The base station sends the scheduling information of the PDSCH to the terminal; and indicates the associated QCL reference signal to the PDSCH through RRC signaling, MAC-CE signaling or the TCI field in the DCI.

When the UE receives the indication information from the base station indicating that the UE is in a high-speed train scenario, and the TCI codepoint indicated by the TCI field is associated with two TCI states, the terminal determines that the transmission of the PDSCH is the transmission scheme of SDM 1c.

### Example 11 corresponding to the mode 11:

The base station indicates to the UE whether the base station performs frequency pre-compensation on the downlink signal.

The base station sends the scheduling information of the PDSCH to the terminal; and indicates the associated QCL reference signal to the PDSCH through RRC signaling, MAC-CE signaling or the TCI field in the DCI.

The UE receives the instruction from the base station that the base station performs frequency pre-compensation on the downlink signal (corresponding to the "frequency pre-compensation scenario"), and the TCI codepoint indicated by the TCI field is associated with two TCI states, then the terminal determines that the transmission of the PDSCH is SDM 1c transmission scheme.

It can be seen from the above that the solution provided by the embodiment of the present disclosure involves the determination method of SDM 1c and the process of UE determining each transmission solution; it can accurately determine the SDM 1c solution and distinguish it from other Multi-TRP solutions, which also ensures to accurately determine the specific transmission scheme when there are multiple Multi-TRP transmission schemes in the system.

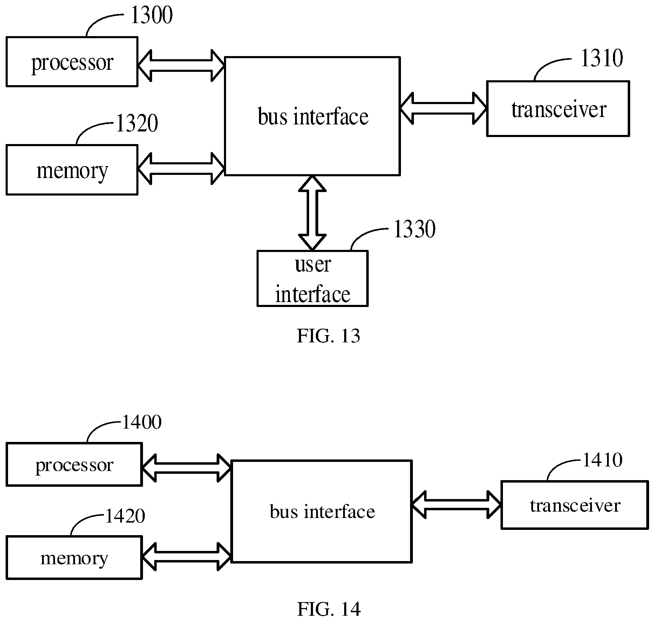

An embodiment of the present disclosure also provides a terminal, as shown in FIG. 13, including a memory 1320, a transceiver 1310, and a processor 1300:
The memory 1320 is used to store computer programs; the transceiver 1310 is used to send and receive data under the control of the processor 1300; the processor 1300 is used to read the computer programs in the memory 1320 and perform the following operations:
receiving transmission mode-related configuration information through the transceiver 1310;
determining whether a transmission scheme of a first signal is a first transmission scheme according to the transmission mode-related configuration information;
wherein, the transmission mode-related configuration information includes:
transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario; in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

In an embodiment of the present disclosure, by receiving the transmission mode-related configuration information; it is determined whether the transmission scheme of the first signal is the first transmission scheme according to the transmission mode-related configuration information; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

The transceiver 1310 is used for receiving and sending data under the control of the processor 1300.

Wherein, in FIG. 13, the bus architecture may include any number of interconnected buses and bridges, specifically various circuits of one or more processors represented by the processor 1300 and the memory represented by the memory 1320 are linked together. The bus architecture can also link together various other circuits such as peripherals, voltage regulators, and power management circuits, etc., which are well known in the art and therefore will not be further described herein. The bus interface provides the interface. Transceiver 1310 may be a plurality of elements, including a transmitter and a receiver, providing means for communicating with various other devices over transmission medium, including wireless channels, wired channels, fiber optic cables, etc. For different user devices, the user interface 1330 may also be an interface capable of connecting externally and internally to required devices, and the connected devices include but not limited to keypads, displays, speakers, microphones, joysticks, and the like.

The processor 1300 is responsible for managing the bus architecture and general processing, and the memory 1320 can store data used by the processor 1300 when performing operations.

Optionally, the processor 1300 may be a central processing unit (CPU), an application specific integrated circuit (ASIC), a field programmable gate array (FPGA) or a complex programmable logic device (CPLD), the processor can also adopt a multi-core architecture.

The processor is used to execute any one of the methods provided by the embodiments of the present disclosure according to the obtained executable instructions by calling the computer program stored in the memory. The processor and memory may also be physically separated.

In an embodiment of the present disclosure, the determining whether the transmission scheme of the first signal is the first transmission scheme according to the transmission mode-related configuration information includes: determining the number of the code division multiplexing (CDM) group where the DMRS port of the first signal is located and/or the quasi-co-located QCL indication information of the DMRS port of the first signal according to the DMRS port indication information; determining whether the transmission scheme of the first signal is the first transmission scheme according to the number and/or the QCL indication information.

Wherein, the determining whether the transmission scheme of the first signal is the first transmission scheme according to the QCL indication information includes: determining the QCL type information and/or number information of the transmission configuration indication state TCI state according to the QCL indication information; determining whether the transmission scheme of the first signal is the first transmission scheme according to the QCL type information and/or the number information of the TCI state.

The following implementation examples are provided for "determining whether the transmission scheme of the first signal is the first transmission scheme" in the embodiments of the present disclosure, but not limited thereto:
Mode 1, determining whether the transmission scheme of the first signal is the first transmission scheme according to the number and/or the QCL indication information includes: determining that the transmission scheme of the first signal is the first transmission scheme in case that a first condition is satisfied; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.
Mode 2, determining whether the transmission scheme of the first signal is the first transmission scheme according to the transmission mode-related configuration information includes: determining that the transmission scheme of the first signal is the first transmission scheme in case that a second condition is satisfied; wherein, the second condition includes that the transmission mode configuration information indicates a value corresponding to the first transmission scheme.
Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.
Mode 4 based on Mode 3, the second condition further includes: the number of CDM groups in which the DMRS port of the first signal is located is 1.
Mode 5, determining whether the transmission scheme of the first signal is the first transmission scheme according to the transmission mode-related configuration information includes: determining that the transmission scheme of the first signal is the first transmission scheme in case that a third condition is satisfied; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.
Mode 6 based on Mode 5, the third condition further includes: the TDRA field of the DCI that schedules the first signal does not indicate a parameter corresponding to the second transmission scheme; wherein, the second transmission scheme is different from the first transmission scheme.
Mode 7, determining whether the transmission scheme of the first signal is the first transmission scheme according to the QCL type information includes: determining that the transmission scheme of the first signal is the first transmission scheme in case that a fifth condition is satisfied; wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameter of channel on a delay property; the second type includes large-scale parameter of channel on a delay property and large-scale parameter of channel on a frequency property.
Mode 8 and Mode 9, determining whether the transmission scheme of the first signal is the first transmission scheme according to the QCL type information includes: determining that the transmission scheme of the first signal is the first transmission scheme in case that a sixth condition is satisfied; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the mode 9; but not limited thereto.

With respect to Modes 7-9, in the embodiments of the present disclosure, the information processing method further includes: determine a frequency of a downlink signal according to the reference signal corresponding to the QCL type indicated in the TCI state and including the large-scale parameter of channel on a frequency property; and/or, determining a transmission frequency of an uplink signal according to the reference signal indicated in the TCI state and corresponding to the QCL type including the large-scale parameter of channel on a frequency property.

Mode 10, the determining whether the transmission scheme of the first signal is the first transmission scheme according to the QCL type information includes: determining that the transmission scheme of the first signal is the first transmission scheme in case that a seventh condition is satisfied; wherein, the seventh condition includes: determining a reference signal that has a QCL relationship with the DMRS port on a large-scale parameter of channel frequency characteristics according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

In the embodiment of the present disclosure, determining the reference signal having a QCL relationship with the DMRS port and the large-scale parameter of channel on a frequency property according to the first rule includes: determining a target TCI state; the reference signal corresponding to a QCL relationship of large-scale parameter of channel on a frequency property included in the target TCI state is used as the reference signal having the QCL relationship with the DMRS port on the large-scale parameter of channel on a frequency property.

Mode 11, the DMRS port indication information includes the QCL indication information of the DMRS port of the first signal; the determining whether the transmission scheme of the first signal is the first transmission scheme according to the transmission mode-related configuration information includes: determining that the transmission scheme of the first signal is the first transmission scheme in case that an eighth condition is satisfied; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

With regard to the above modes, in the embodiment of the present disclosure, the operation further includes: determining the frequency of the downlink signal according to the reference signal used to determine the transmission frequency of the uplink signal.

For each of the above modes, in the embodiment of the present disclosure, the information processing method further includes: determine the frequency of the downlink signal according to the reference signal that has a QCL relationship with the DMRS port of the first signal with respect to the large-scale parameter of channel on a frequency property; and/or, determining the transmission frequency of the uplink signal according to the reference signal having a QCL relationship with the DMRS port of the first signal with respect to the large-scale parameter of channel on a frequency property.

In the embodiment of the present disclosure, the operation further includes: determining that the transmission scheme of the first signal is the third transmission scheme in case that a ninth condition is satisfied; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

What needs to be explained here is that the above-mentioned terminal provided by the embodiment of the present disclosure can implement all the method steps implemented by the above-mentioned terminal-side method embodiment, and can achieve the same technical effect. The same parts and beneficial effects are not described in detail.

An embodiment of the present disclosure also provides a network device, as shown in FIG. 14, including a memory 1420, a transceiver 1410, and a processor 1400:
The memory 1420 is used to store computer programs; the transceiver 1410 is used to send and receive data under the control of the processor 1400; the processor 1400 is used to read the computer programs in the memory 1420 and perform the following operations:
Sending transmission mode-related configuration information through the transceiver 1410 to indicate whether a transmission scheme of a first signal is a first transmission scheme;
wherein, the transmission mode-related configuration information includes:
   transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario;
   in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

In the embodiment of the present disclosure, transmission mode-related configuration information is sent to indicate whether the transmission scheme of the first signal is the first transmission scheme; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

The transceiver 1410 is used for receiving and sending data under the control of the processor 1400.

Wherein, in FIG. 14, the bus architecture may include any number of interconnected buses and bridges, specifically various circuits of one or more processors represented by the processor 1400 and the memory represented by the memory 1420 are linked together. The bus architecture can also link together various other circuits such as peripherals, voltage regulators, and power management circuits, etc., which are well known in the art and therefore will not be further described herein. The bus interface provides the interface. The transceiver 1410 may be a plurality of elements, including a transmitter and a receiver, providing a unit for communicating with various other devices over transmission medium, including wireless channels, wired channels, optical cables, and other transmission medium. The processor 1400 is responsible for managing the bus architecture and general processing, and the memory 1420 can store data used by the processor 1400 when performing operations.

The processor 1400 may be a CPU, an ASIC, a FPGA or a CPLD, the processor can also adopt a multi-core architecture.

In the embodiment of the present disclosure, the sending transmission mode-related configuration information to indicate whether the transmission scheme of the first signal is the first transmission scheme includes: using the DMRS port indication information to indicate the number of code division multiplexing CDM groups where the DMRS port of the first signal is located, and/or the quasi-co-located QCL indication information of the DMRS port of the first signal, to indicate whether the transmission scheme of the first signal is the first transmission scheme.

Wherein, using the DMRS port indication information to indicate QCL indication information to indicate whether the transmission scheme of the first signal is the first transmission scheme includes: indicating QCL type information and/or the number information of transmission configuration indication state TCI states through the QCL indication information, to indicate whether the transmission scheme of the first signal is the first transmission scheme.

The following implementation are provided for "indicating whether the transmission scheme of the first signal is the first transmission scheme" in the embodiments of the present disclosure, but not limited thereto:
Mode 1, the DMRS port indication information indicates the number of code division multiplexing CDM groups where the DMRS port of the first signal is located, and/or the quasi-co-location QCL indication information of the DMRS port of the first signal to indicate whether the transmission scheme of the first signal is the first transmission scheme, including: information indicating that the first condition is met, to indicate that the transmission scheme of the first signal is the first transmission scheme; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.
Mode 2, the transmission mode-related configuration information is sent to indicate whether the transmission scheme of the first signal is the first transmission scheme, including: information indicating that the second condition is met, so as to indicate that the transmission scheme of the first signal is the first transmission scheme; Wherein, the second condition includes a value corresponding to the first transmission scheme indicated by the transmission mode configuration information.
Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.
Mode 4 based on Mode 3, the second condition further includes: the number of CDM groups in which the DMRS port of the first signal is located is 1.
Mode 5, the sending transmission mode-related configuration information to indicate whether the transmission scheme of the first signal is the first transmission scheme includes: indicating information that the third condition is met through the DMRS port indication information, to indicate the transmission scheme of the first signal is the first transmission scheme; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.
Mode 6 based on Mode 5, the third condition further includes: the TDRA field of the DCI that schedules the first signal does not indicate a parameter corresponding to the second transmission scheme; wherein, the second transmission scheme is different from the first transmission scheme.
Mode 7: using the QCL indication information to indicate the QCL type information to indicate whether the transmission scheme of the first signal is the first transmission scheme, including: indicating information that the fifth condition is met through the QCL indication information to indicate that the transmission scheme of the first signal is the first transmission scheme, wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameter of channel on a delay property; the second type includes large-scale parameter of channel on a delay property and large-scale parameter of channel on a frequency property.
Mode 8 and Mode 9, using the QCL indication information to indicate QCL type information to indicate whether the transmission scheme of the first signal is the first transmission scheme, including: indicating information that the sixth condition is met through the QCL indication information, to indicate that the transmission scheme of the first signal is the first transmission scheme; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the ninth mode; but not limited thereto.

With respect to modes 7 to 9, in the embodiments of the present disclosure, the information processing method further includes: using the TCI state to indicate to the reference signal corresponding to the QCL type including the large-scale parameter of channel on a frequency property.

Mode 10: using the QCL indication information to indicate QCL type information to indicate whether the transmission scheme of the first signal is the first transmission scheme, including: indicating information that the seventh condition is met through the QCL indication information to indicate that the transmission scheme of the first signal is the first transmission scheme; wherein, the seventh condition includes: determining a reference signal that has a QCL relationship with the DMRS port on a large-scale parameter of channel frequency characteristics according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

In the embodiment of the present disclosure, the operation further includes: sending first indication information used to indicate the target TCI state; the reference signal corresponding to the QCL type of the large-scale parameter of channel on a frequency property included in the target TCI state is a reference signal having a QCL relationship with the DMRS port with respect to the large-scale parameter of channel on a frequency property.

Mode 11, the DMRS port indication information includes the QCL indication information of the DMRS port of the first signal; and the sending transmission mode-related configuration information to indicate whether the transmission scheme of the first signal is the first transmission scheme includes: indicating information that the eighth condition is met through the transmission mode-related configuration information to indicate that the transmission scheme of the first signal is the first transmission scheme; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

With regard to the above modes, in the embodiment of the present disclosure, the information processing method further includes: indicating a reference signal used to determine the transmission frequency of the uplink signal.

With regard to the above modes, in the embodiments of the present disclosure, the information processing method further includes: indicating a reference signal that has a QCL relationship with the DMRS port of the first signal with respect to the frequency characteristic channel large-scale parameter.

In the embodiment of the present disclosure, the operation further includes: indicating information that the ninth condition is met through the transmission mode-related configuration information, so as to indicate that the transmission scheme of the first signal is the third transmission scheme; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

It should be noted here that the above-mentioned network device provided by the embodiments of the present disclosure can realize all the method steps realized by the above-mentioned method embodiments on the network device side, and can achieve the same technical effect. The same parts and beneficial effects of the method embodiments are not described in detail.

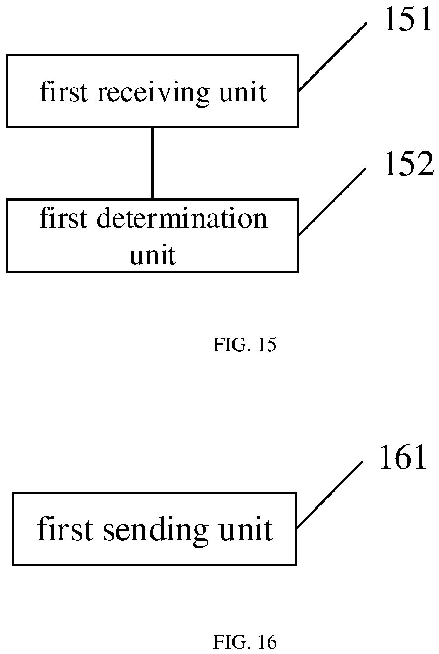

An embodiment of the present disclosure also provides an information processing device, as shown in FIG. 15, including:
a first receiving unit 151, configured to receive transmission mode-related configuration information;
a first determination unit 152, configured to determine whether a transmission scheme of a first signal is a first transmission scheme according to the transmission mode-related configuration information;
wherein, the transmission mode-related configuration information includes:
   transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario;
   in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

In an embodiment of the present disclosure, by receiving the transmission mode-related configuration information; it is determined whether the transmission scheme of the first signal is the first transmission scheme according to the transmission mode-related configuration information; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

In an embodiment of the present disclosure, the determining whether the transmission scheme of the first signal is the first transmission scheme according to the transmission mode-related configuration information includes: determining the number of the code division multiplexing (CDM) group where the DMRS port of the first signal is located and/or the quasi-co-located QCL indication information of the DMRS port of the first signal according to the DMRS port indication information; determining whether the transmission scheme of the first signal is the first transmission scheme according to the number and/or the QCL indication information.

Wherein, the determining whether the transmission scheme of the first signal is the first transmission scheme according to the QCL indication information includes: determining the QCL type information and/or number information of the transmission configuration indication state TCI state according to the QCL indication information; determining whether the transmission scheme of the first signal is the first transmission scheme according to the QCL type information and/or the number information of the TCI state.

The following implementation examples are provided for "determining whether the transmission scheme of the first signal is the first transmission scheme" in the embodiments of the present disclosure, but not limited thereto:
Mode 1, determining whether the transmission scheme of the first signal is the first transmission scheme according to the number and/or the QCL indication information includes: determining that the transmission scheme of the first signal is the first transmission scheme in case that a first condition is satisfied; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.
Mode 2, determining whether the transmission scheme of the first signal is the first transmission scheme according to the transmission mode-related configuration information includes: determining that the transmission scheme of the first signal is the first transmission scheme in case that a second condition is satisfied; wherein, the second condition includes that the transmission mode configuration information indicates a value corresponding to the first transmission scheme.
Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.
Mode 4 based on Mode 3, the second condition further includes: the number of CDM groups in which the DMRS port of the first signal is located is 1.
Mode 5, determining whether the transmission scheme of the first signal is the first transmission scheme according to the transmission mode-related configuration information includes: determining that the transmission scheme of the first signal is the first transmission scheme in case that a third condition is satisfied; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.
Mode 6 based on Mode 5, the third condition further includes: the TDRA field of the DCI that schedules the first signal does not indicate a parameter corresponding to the second transmission scheme; wherein, the second transmission scheme is different from the first transmission scheme.
Mode 7, determining whether the transmission scheme of the first signal is the first transmission scheme according to the QCL type information includes: determining that the transmission scheme of the first signal is the first transmission scheme in case that a fifth condition is satisfied; wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameter of channel on a delay property; the second type includes large-scale parameter of channel on a delay property and large-scale parameter of channel on a frequency property.
Mode 8 and Mode 9, determining whether the transmission scheme of the first signal is the first transmission scheme according to the QCL type information includes: determining that the transmission scheme of the first signal is the first transmission scheme in case that a sixth condition is satisfied; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the mode 9; but not limited thereto.

With respect to Modes 7-9, in the embodiments of the present disclosure, the information processing method further includes: determine a frequency of a downlink signal according to the reference signal corresponding to the QCL type indicated in the TCI state and including the large-scale parameter of channel on a frequency property; and/or, determining a transmission frequency of an uplink signal according to the reference signal indicated in the TCI state and corresponding to the QCL type including the large-scale parameter of channel on a frequency property.

Mode 10, the determining whether the transmission scheme of the first signal is the first transmission scheme according to the QCL type information includes: determining that the transmission scheme of the first signal is the first transmission scheme in case that a seventh condition is satisfied; wherein, the seventh condition includes: determining a reference signal that has a QCL relationship with the DMRS port on a large-scale parameter of channel frequency characteristics according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

In the embodiment of the present disclosure, determining the reference signal having a QCL relationship with the DMRS port and the large-scale parameter of channel on a frequency property according to the first rule includes: determining a target TCI state; the reference signal corresponding to a QCL relationship of large-scale parameter of channel on a frequency property included in the target TCI state is used as the reference signal having the QCL relationship with the DMRS port on the large-scale parameter of channel on a frequency property.

Mode 11, the DMRS port indication information includes the QCL indication information of the DMRS port of the first signal; the determining whether the transmission scheme of the first signal is the first transmission scheme according to the transmission mode-related configuration information includes: determining that the transmission scheme of the first signal is the first transmission scheme in case that an eighth condition is satisfied; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

With regard to the above modes, in the embodiment of the present disclosure, the operation further includes: determining the frequency of the downlink signal according to the reference signal used to determine the transmission frequency of the uplink signal.

For each of the above modes, in the embodiment of the present disclosure, the information processing method further includes: determine the frequency of the downlink signal according to the reference signal that has a QCL relationship with the DMRS port of the first signal with respect to the large-scale parameter of channel on a frequency property; and/or, determining the transmission frequency of the uplink signal according to the reference signal having a QCL relationship with the DMRS port of the first signal with respect to the large-scale parameter of channel on a frequency property.

In an embodiment of the present disclosure, the information processing device further includes: a fifth determining unit, configured to determine that the transmission scheme of the first signal is the third transmission scheme in case that a ninth condition is satisfied; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

What needs to be explained here is that the above-mentioned terminal provided by the embodiment of the present disclosure can implement all the method steps implemented by the above-mentioned terminal-side method embodiment, and can achieve the same technical effect. The same parts and beneficial effects are not described in detail.

An embodiment of the present disclosure also provides an information processing device, as shown in FIG. 16, including:
a first sending unit 161 is configured to send transmission mode-related configuration information to indicate whether a transmission scheme of a first signal is a first transmission scheme;
wherein, the transmission mode-related configuration information includes:
   transmission mode configuration information, Demodulation Reference signal (DMRS) port indication information of the first signal, time-domain resource allocation (TDRA) indication information about the first signal, and/or scenario indication information about whether the terminal is in a high-speed train scenario and/or a frequency pre-compensation scenario;
   in the first transmission scheme, one layer of the first signal and at least two reference signals have a quasi-co-located (QCL) relationship with respect to at least one large-scale parameter of channel; and/or, one DMRS port of the first signal and at least two reference signals have a QCL relationship with respect to at least one large-scale parameter of channel.

In the embodiment of the present disclosure, transmission mode-related configuration information is sent to indicate whether the transmission scheme of the first signal is the first transmission scheme; wherein, the transmission mode-related configuration information includes the following: transmission mode configuration information, demodulation reference signal DMRS port indication information of the first signal, time-domain resource allocation TDRA indication information about the first signal, and/or indication information on whether the terminal is in a high-speed train scenario and/or a frequency pre-compensation scenario; in the first transmission scheme, one layer of the first signal and at least two reference signals have a quasi-co-location QCL relationship with respect to at least one large-scale parameter of channel; and/or, the one DMRS port of the first signal has a QCL relationship with at least two reference signals on at least one large-scale parameter of channel; it can realize accurate identification for the first transmission scheme, and then realize accurate determination of specific transmission scheme when there are multiple Multi-TRP transmission schemes in the system, can well solve the problem in the related art that the specific transmission scheme cannot be accurately determined when there are multiple Multi-TRP transmission schemes in the system.

In the embodiment of the present disclosure, the sending transmission mode-related configuration information to indicate whether the transmission scheme of the first signal is the first transmission scheme includes: using the DMRS port indication information to indicate the number of code division multiplexing CDM groups where the DMRS port of the first signal is located, and/or the quasi-co-located QCL indication information of the DMRS port of the first signal, to indicate whether the transmission scheme of the first signal is the first transmission scheme.

Wherein, using the DMRS port indication information to indicate QCL indication information to indicate whether the transmission scheme of the first signal is the first transmission scheme includes: indicating QCL type information and/or the number information of transmission configuration indication state TCI states through the QCL indication information, to indicate whether the transmission scheme of the first signal is the first transmission scheme.

The following implementation are provided for "indicating whether the transmission scheme of the first signal is the first transmission scheme" in the embodiments of the present disclosure, but not limited thereto:
Mode 1, the DMRS port indication information indicates the number of code division multiplexing CDM groups where the DMRS port of the first signal is located, and/or the quasi-co-location QCL indication information of the DMRS port of the first signal to indicate whether the transmission scheme of the first signal is the first transmission scheme, including: information indicating that the first condition is met, to indicate that the transmission scheme of the first signal is the first transmission scheme; wherein, the first condition includes: the TDRA field of the DCI scheduling the first signal does not indicate a parameter corresponding to a second transmission scheme; all DMRS ports of the first signal are located in one CDM group and, as follows: the QCL indication information indicates that the first signal is associated with at least two TCI states, and/or the QCL indication information indicates that the DMRS port of the first signal is associated with at least two TCI states; wherein, the second transmission scheme is different from the first transmission scheme.
Mode 2, the transmission mode-related configuration information is sent to indicate whether the transmission scheme of the first signal is the first transmission scheme, including: information indicating that the second condition is met, so as to indicate that the transmission scheme of the first signal is the first transmission scheme; Wherein, the second condition includes a value corresponding to the first transmission scheme indicated by the transmission mode configuration information.
Mode 3 based on Mode 2, the DMRS port indication information includes the QCL indication information of the DMRS port of the first signal; the second condition further includes the following: the QCL indication information indicates that the first signal is associated with at least two TCI states, and/or the QCL indication information indicates that the DMRS port of the first signal is associated with at least two TCI states.
Mode 4 based on Mode 3, the second condition further includes: the number of CDM groups in which the DMRS port of the first signal is located is 1.
Mode 5, the sending transmission mode-related configuration information to indicate whether the transmission scheme of the first signal is the first transmission scheme includes: indicating information that the third condition is met through the DMRS port indication information, to indicate the transmission scheme of the first signal is the first transmission scheme; wherein, the third condition includes the following: the QCL indication information indicates that the first signal is associated with at least one TCI state that meets the fourth condition; and/or the QCL indication information indicates the DMRS port of the first signal is associated with at least one TCI state that meets a fourth condition; the fourth condition includes: the number of QCL types associated with at least two reference signals is at least one.
Mode 6 based on Mode 5, the third condition further includes: the TDRA field of the DCI that schedules the first signal does not indicate a parameter corresponding to the second transmission scheme; wherein, the second transmission scheme is different from the first transmission scheme.
Mode 7: using the QCL indication information to indicate the QCL type information to indicate whether the transmission scheme of the first signal is the first transmission scheme, including: indicating information that the fifth condition is met through the QCL indication information to indicate that the transmission scheme of the first signal is the first transmission scheme, wherein, the fifth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and one QCL type included in one TCI state is a second type; the large-scale parameter of channel included in the first type are large-scale parameter of channel on a delay property; the second type includes large-scale parameter of channel on a delay property and large-scale parameter of channel on a frequency property.
Mode 8 and Mode 9, using the QCL indication information to indicate QCL type information to indicate whether the transmission scheme of the first signal is the first transmission scheme, including: indicating information that the sixth condition is met through the QCL indication information, to indicate that the transmission scheme of the first signal is the first transmission scheme; wherein, the sixth condition includes the following: the QCL indication information indicates that the first signal is associated with at least two TCI states, and/or the QCL indication information indicates that the DMRS port of the first signal is associated with at least two TCI states; wherein, a QCL type included in one TCI state in the at least two TCI states is a first type, and a QCL type included in one TCI state is a third type; the large-scale parameter of channel included in the first type are all delay characteristic parameters; the large-scale parameter of channel included in the third type are all frequency characteristic parameters.

Specifically, the large-scale parameter of channel included in the first type may specifically be {average delay, delay spread}, corresponding to mode eight; the large-scale parameter of channel included in the first type may specifically be {time delay extension} or {average delay}, corresponding to the ninth mode; but not limited thereto.

With respect to modes 7 to 9, in the embodiments of the present disclosure, the information processing method further includes: using the TCI state to indicate to the reference signal corresponding to the QCL type including the large-scale parameter of channel on a frequency property.

Mode 10: using the QCL indication information to indicate QCL type information to indicate whether the transmission scheme of the first signal is the first transmission scheme, including: indicating information that the seventh condition is met through the QCL indication information to indicate that the transmission scheme of the first signal is the first transmission scheme; wherein, the seventh condition includes: determining a reference signal that has a QCL relationship with the DMRS port on a large-scale parameter of channel frequency characteristics according to the first rule; and, the QCL indication information indicates that the first signal is associated with at least two TCI states, and/or, the QCL indication information indicates that the DMRS port of the first signal is associated with at least two TCI states; wherein, the at least two TCI states include two TCI states that both satisfy: one QCL type is the second type; the second type includes large-scale parameter of channel on a delay property and large-scale parameter of channel on a frequency property.

In the embodiment of the present disclosure, the operation further includes: sending first indication information used to indicate the target TCI state; the reference signal corresponding to the QCL type of the large-scale parameter of channel on a frequency property included in the target TCI state is a reference signal having a QCL relationship with the DMRS port with respect to the large-scale parameter of channel on a frequency property.

Mode 11, the DMRS port indication information includes the QCL indication information of the DMRS port of the first signal; and the sending transmission mode-related configuration information to indicate whether the transmission scheme of the first signal is the first transmission scheme includes: indicating information that the eighth condition is met through the transmission mode-related configuration information to indicate that the transmission scheme of the first signal is the first transmission scheme; wherein, the eighth condition includes: the scenario indication information indicates that the terminal is in a high-speed train scenario and/or a frequency pre-compensation scenario, and the QCL indication information indicates that the DMRS port of the first signal is associated with at least two TCI states.

With regard to the above modes, in the embodiment of the present disclosure, the information processing method further includes: indicating a reference signal used to determine the transmission frequency of the uplink signal.

With regard to the above modes, in the embodiments of the present disclosure, the information processing method further includes: indicating a reference signal that has a QCL relationship with the DMRS port of the first signal with respect to the large-scale parameter of channel on a frequency property.

In an embodiment of the present disclosure, the information processing device further includes: a fourth indicating unit, configured to indicate information that the ninth condition is met through the transmission mode-related configuration information, so as to indicate that the transmission scheme of the first signal is the third transmission scheme; wherein the ninth condition includes: a TDRA field of the DCI for scheduling the first signal does not indicate the parameters corresponding to the second transmission scheme; the transmission mode configuration information is not configured as a value corresponding to the first transmission scheme; the number of CDM groups where the DMRS port of the first signal is located is 2; and, as follows: the first signal is associated with 2 TCI states; and/or the DMRS port of the first signal is associated with 2 TCI states; the third transmission scheme, the second transmission scheme and the first transmission schemes are different from each other.

It should be noted here that the above-mentioned network device provided by the embodiments of the present disclosure can realize all the method steps realized by the above-mentioned method embodiments on the network device side, and can achieve the same technical effect. The same parts and beneficial effects of the method embodiments are not described in detail.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, it can be stored in a processor-readable storage medium. Based on such an understanding, the essence of the technical solution of the present disclosure or the part that contributes to the related art or all or part of the technical solution can be embodied in the form of a software product, and the computer software product is stored in a storage medium. Several instructions are included to make a computer device (which may be a personal computer, a server, or a network device, etc.) or a processor execute all or part of the steps of the methods described in the various embodiments of the present disclosure. The aforementioned storage medium include: U disk, mobile hard disk, read-only memory (ROM), random access memory (RAM), magnetic disk or optical disk and other media that can store program codes.

The embodiment of the present disclosure also provides a processor-readable storage medium, the processor-readable storage medium stores a computer program, and the computer program is used to enable the processor to execute the information processing method on the terminal side, Alternatively, the computer program is used to enable the processor to execute the information processing method on the network device side.

The processor-readable storage medium can be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

Wherein, the above implementation embodiments of the information processing method on the terminal side or the network device side are all applicable to the embodiment of the processor-readable storage medium, and can also achieve the same technical effect.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage medium (including but not limited to magnetic disk storage, optical storage, etc.) having computer-usable program code embodied therein.

The present disclosure is described with reference to flowchart illustrations and/or block diagrams of methods, apparatus (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce means for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product, the instruction device realizes the function specified in one or more procedures of the flow chart and/or one or more blocks of the block diagram.

These processor-executable instructions can also be loaded onto a computer or other programmable data processing device, causing a series of operational steps to be performed on the computer or other programmable device to produce a computer-implemented the executed instructions provide steps for implementing the functions specified in the flowchart procedure or procedures and/or block diagram procedures or blocks.

It should be noted that it should be understood that the division of the above modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, the determining module may be a separate processing element, or may be integrated in a chip of the above-mentioned device. In addition, it may be stored in the memory of the above-mentioned device in the form of program code, and a certain processing element of the above-mentioned device may Call and execute the functions of the modules identified above. The implementation of other modules is similar. In addition, all or part of these modules can be integrated together, and can also be implemented independently. The processing element mentioned here may be an integrated circuit with signal processing capability. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or Multiple microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (SOC).

The terms "first", "second" and the like in the specification and claims of the present disclosure are used to distinguish similar objects, and are not necessarily used to describe a specific order or sequence. It should be understood that the data so used may be interchanged under appropriate circumstances such that the embodiments of the disclosure described herein are practiced, for example, in sequences other than those illustrated or described herein. Furthermore, the terms "comprising" and "having", as well as any variations thereof, are intended to cover a non-exclusive inclusion, for example, a process, method, system, product or device comprising a sequence of steps or elements is not necessarily limited to the expressly listed instead, may include other steps or elements not explicitly listed or inherent to the process, method, product or apparatus. In addition, the use of "and/or" in the description and claims means at least one of the connected objects, such as A and/or B and/or C, means that it includes A alone, B alone, C alone, and both A and B Existence, both B and C exist, both A and C exist, and there are 7 situations where A, B, and C all exist. Similarly, the use of "at least one of A and B" in the present specification and claims should be understood as "A alone, B alone, or both A and B exist".

It is obvious that those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information processing method, comprising:
receiving transmission mode-related configuration information;
determining whether a transmission scheme of a first signal is a first transmission scheme according to the transmission mode-related configuration information;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

2. The information processing method according to claim 1, wherein, the determining whether a transmission scheme of a first signal is a first transmission scheme according to the transmission mode-related configuration information includes:
determining a number of a code division multiplexing (CDM) group where the DMRS port of the first signal is located and/or QCL indication information of the DMRS port of the first signal according to the DMRS port indication information;
determining whether the transmission scheme of the first signal is the first transmission scheme according to the number and/or the QCL indication information.

3. The information processing method according to claim 2, wherein, the determining whether the transmission scheme of the first signal is the first transmission scheme according to the QCL indication information includes:
determining QCL type information and/or number information of a transmission configuration indication (TCI) state according to the QCL indication information;
determining whether the transmission scheme of the first signal is the first transmission scheme according to the QCL type information and/or the number information of the TCI state.

4. The information processing method according to claim 2, wherein, the determining whether the transmission scheme of the first signal is the first transmission scheme according to the number and/or the QCL indication information includes:
determining that the transmission scheme of the first signal is the first transmission scheme in case that a first condition is satisfied;
wherein, the first condition includes:
a TDRA field of the DCI scheduling the first signal does not indicate a parameter corresponding to a second transmission scheme;
all DMRS ports of the first signal are located in a CDM group; and
the QCL indication information indicates that the first signal is associated with at least two TCI states, and/or the QCL indication information indicates that the DMRS port of the first signal is associated with at least two TCI states;
wherein, the second transmission scheme is different from the first transmission scheme.

5. The information processing method according to claim 1, wherein the determining whether the transmission scheme of the first signal is the first transmission scheme according to the transmission mode-related configuration information includes:
determining that the transmission scheme of the first signal is the first transmission scheme in case that a second condition is satisfied;
wherein, the second condition includes that the transmission mode configuration information indicates a value corresponding to the first transmission scheme.

6. The information processing method according to claim 5, wherein the DMRS port indication information includes the QCL indication information of the DMRS port of the first signal;
the second condition further includes:
the QCL indication information indicates that the first signal is associated with at least two TCI states, and/or
the QCL indication information indicates that the DMRS port of the first signal is associated with at least two TCI states.

7. The information processing method according to claim 6, wherein the second condition further includes: the number of the CDM group where the DMRS port of the first signal is located is 1.

8. The information processing method according to claim 2, wherein, the determining whether the transmission scheme of the first signal is the first transmission scheme according to the transmission mode-related configuration information includes:
determining that the transmission scheme of the first signal is the first transmission scheme in case that a third condition is satisfied;
wherein, the third condition includes the following:
the QCL indication information indicates that the first signal is associated with at least one TCI state that meets a fourth condition; and/or
the QCL indication information indicates the DMRS port of the first signal is associated with at least one TCI state that meets the fourth condition;
the fourth condition includes: the number of QCL types associated with at least two reference signals is at least one.

9. The information processing method according to claim 8, wherein the third condition further includes: the TDRA field of the DCI that schedules the first signal does not indicate the parameter corresponding to the second transmission scheme;
wherein, the second transmission scheme is different from the first transmission scheme.

10. The information processing method according to claim 3, wherein, the determining whether the transmission scheme of the first signal is the first transmission scheme according to the QCL type information includes:
determining that the transmission scheme of the first signal is the first transmission scheme in case that a fifth condition is satisfied;
wherein, the fifth condition includes the following:
the QCL indication information indicates that the first signal is associated with at least two TCI states, and/or
the QCL indication information indicates that the DMRS port of the first signal is associated with at least two TCI states;
wherein, a QCL type included in a TCI state of the at least two TCI states is a first type, and a QCL type included in the TCI state is a second type;
a large-scale parameter of channel included in the first type is a large-scale parameter of channel on a delay property;
the second type includes the large-scale parameter of channel on a delay property and a large-scale parameter of channel on a frequency property.

11. The information processing method according to claim 3, wherein, determining whether the transmission scheme of the first signal is the first transmission scheme according to the QCL type information includes:
determining that the transmission scheme of the first signal is the first transmission scheme in case that a sixth condition is satisfied;
wherein, the sixth condition includes the following:
the QCL indication information indicates that the first signal is associated with at least two TCI states, and/or
the QCL indication information indicates that the DMRS port of the first signal is associated with at least two TCI states;
wherein, a QCL type included in a TCI state of the at least two TCI states is a first type, and a QCL type included in the TCI state is a third type;
large-scale parameters of channel included in the first type are all delay characteristic parameters;
large-scale parameters of channel included in the third type are all frequency characteristic parameters.

12. The information processing method according to any one of claims 5 to 6, 10 to 11, further comprising:
determine a frequency of a downlink signal according to a reference signal corresponding to a QCL type indicated in the TCI state and including the large-scale parameter of channel on a frequency property; and/or,
determining a transmission frequency of an uplink signal according to areference signal indicated in the TCI state and corresponding to the QCL type including the large-scale parameter of channel on a frequency property.

13. The information processing method according to claim 3, wherein, the determining whether the transmission scheme of the first signal is the first transmission scheme according to the QCL type information includes:
determining that the transmission scheme of the first signal is the first transmission scheme in case that a seventh condition is satisfied;
wherein, the seventh condition includes:
determining a reference signal that has a QCL relationship with the DMRS port with respect to the large-scale parameter of channel on a frequency property according to the first rule; and,
the QCL indication information indicates that the first signal is associated with at least two TCI states, and/or, the QCL indication information indicates that the DMRS port of the first signal is associated with at least two TCI states;
wherein, the at least two TCI states include two TCI states that both satisfy: a QCL type included in each of the two TCI states is of the second type;
the second type includes large-scale parameter of channel on a delay property and large-scale parameter of channel on a frequency property.

14. The information processing method according to claim 13, wherein, the determining the reference signal that has a QCL relationship with the DMRS port and the large-scale parameter with respect to large-scale parameter of channel on a frequency property according to the first rule includes:
determining a target TCI state according to first indication information sent by a network device;
wherein a reference signal corresponding to a QCL relationship of large-scale parameter of channel on a frequency property included in the target TCI state is used as the reference signal having the QCL relationship with the DMRS port with respect to the large-scale parameter of channel on a frequency property.

15. The information processing method according to claim 1, wherein the transmission mode-related configuration information instructs the terminal to determine the reference signal having a QCL relationship with the DMRS port with respect to the large-scale parameter of channel on a frequency property according to a first rule;
the determining the reference signal having a QCL relationship with the DMRS port with respect to the large-scale parameter of channel on a frequency property according to the first rule includes:
determining the target TCI state; using the reference signal corresponding to the QCL type including the large-scale parameter of channel on a frequency property in the target TCI state as a reference signal having a QCL relationship with the DMRS port with respect to the large-scale parameter of channel on a frequency property, the large-scale parameter of channel on a frequency property include {Doppler shift, Doppler spread}.

16. The information processing method according to claim 1, wherein the transmission mode-related configuration information instructs the terminal to determine a reference signal having a QCL relationship with the DMRS port with respect to large-scale parameter of channel on a frequency property according to a first rule;
the determining the reference signal having a QCL relationship with the DMRS port with respect to the large-scale parameter of channel on a frequency property according to the first rule includes: ignoring the following large-scale parameter of channel in the first TCI state: {Doppler shift, Doppler spread}.

17. The information processing method according to claim 1, wherein the DMRS port indication information includes QCL indication information of the DMRS port of the first signal;
the determining whether the transmission scheme of the first signal is the first transmission scheme according to the transmission mode-related configuration information includes:
determining that the transmission scheme of the first signal is the first transmission scheme in case that an eighth condition is satisfied;
wherein the eighth condition includes: the scenario indication information indicates that the terminal is in a high-speed train scenario and/or a frequency pre-compensation scenario, and the QCL indication information indicates that the DMRS port of the first signal is associated with at least two TCI states.

18. The information processing method according to any one of claims 1 to 11 and 13 to 17, further comprising:
determining a frequency of a downlink signal according to a reference signal used to determine a transmission frequency of an uplink signal.

19. The information processing method according to any one of claims 1 to 11 and 13 to 17, further comprising:
determining a frequency of a downlink signal according to the reference signal having a QCL relationship with the DMRS port of the first signal with respect to the large-scale parameter of channel on a frequency property; and/or,
determining a transmission frequency of an uplink signal according to the reference signal having a QCL relationship with the DMRS port of the first signal with respect to the large-scale parameter of channel on a frequency property.

20. The information processing method according to claim 1, further comprising:
determining that the transmission scheme of the first signal is a third transmission scheme in case that a ninth condition is satisfied;
wherein the ninth condition includes: a TDRA field of the DCI for scheduling the first signal does not indicate a parameter corresponding to a second transmission scheme;
the transmission mode configuration information is not configured as a value corresponding to the first transmission scheme;
a number of CDM groups where the DMRS port of the first signal is located is 2; and
the first signal is associated with 2 TCI states; and/or the DMRS port of the first signal is associated with 2 TCI states; and/or the third transmission scheme, the second transmission scheme and the first transmission schemes are different from each other.

21. An information processing method, comprising:
sending transmission mode-related configuration information to indicate whether a transmission scheme of a first signal is a first transmission scheme;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

22. The information processing method according to claim 21, wherein the sending transmission mode-related configuration information to indicate whether a transmission scheme of a first signal is a first transmission scheme comprises:
indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme.

23. The information processing method according to claim 22, wherein, indicating QCL indication information through the DMRS port indication information, to indicate whether the transmission scheme of the first signal is the first transmission scheme, comprises:
indicating QCL type information through the QCL indication information, and/or number information of the transmission configuration indication (TCI) state, to indicate whether the transmission scheme of the first signal is the first transmission scheme.

24. The information processing method according to claim 22, wherein, the indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme includes:
indicating information that met a first condition, to indicate that the transmission scheme of the first signal is the first transmission scheme;
wherein, the first condition includes:
a TDRA field of the DCI scheduling the first signal does not indicate a parameter corresponding to a second transmission scheme;
all DMRS ports of the first signal are located in a CDM group; and
the QCL indication information indicates that the first signal is associated with at least two TCI states, and/or the QCL indication information indicates that the DMRS port of the first signal is associated with at least two TCI states;
wherein, the second transmission scheme is different from the first transmission scheme.

25. The information processing method according to claim 21, wherein the sending transmission mode-related configuration information to indicate whether the transmission scheme of the first signal is the first transmission scheme comprises:
indicating information that met a second condition, to indicate that the transmission scheme of the first signal is the first transmission scheme;
wherein, the second condition includes that the transmission mode configuration information indicates a value corresponding to the first transmission scheme.

26. The information processing method according to claim 25, wherein the DMRS port indication information includes the QCL indication information of the DMRS port of the first signal;
the second condition further includes:
the QCL indication information indicates that the first signal is associated with at least two TCI states, and/or
the QCL indication information indicates that the DMRS port of the first signal is associated with at least two TCI states.

27. The information processing method according to claim 26, wherein the second condition further includes: the number of the CDM group where the DMRS port of the first signal is located is 1.

28. The information processing method according to claim 22, wherein the sending transmission mode-related configuration information to indicate whether the transmission scheme of the first signal is the first transmission scheme comprises:
indicating information that met a third condition through the DMRS port indication information, to indicate that the transmission scheme of the first signal is the first transmission scheme;
wherein, the third condition includes the following:
the QCL indication information indicates that the first signal is associated with at least one TCI state that meets a fourth condition; and/or
the QCL indication information indicates the DMRS port of the first signal is associated with at least one TCI state that meets the fourth condition;
the fourth condition includes: the number of QCL types associated with at least two reference signals is at least one.

29. The information processing method according to claim 28, wherein the third condition further includes: the TDRA field of the DCI that schedules the first signal does not indicate the parameter corresponding to the second transmission scheme;
wherein, the second transmission scheme is different from the first transmission scheme.

30. The information processing method according to claim 23, wherein, indicating QCL type information through the QCL indication information, to indicate whether the transmission scheme of the first signal is the first transmission scheme, comprises:
indicating information that met a fifth condition through the QCL indication information, to indicate that the transmission scheme of the first signal is the first transmission scheme;
wherein, the fifth condition includes the following:
the QCL indication information indicates that the first signal is associated with at least two TCI states, and/or
the QCL indication information indicates that the DMRS port of the first signal is associated with at least two TCI states;
wherein, a QCL type included in a TCI state of the at least two TCI states is a first type, and a QCL type included in the TCI state is a second type;
a large-scale parameter of channel included in the first type is a large-scale parameter of channel on a delay property;
the second type includes the large-scale parameter of channel on a delay property and a large-scale parameter of channel on a frequency property.

31. The information processing method according to claim 23, wherein, indicating QCL type information through the QCL indication information, to indicate whether the transmission scheme of the first signal is the first transmission scheme, comprises:
indicating information that met a sixth condition through the QCL indication information, to indicate that the transmission scheme of the first signal is the first transmission scheme;
wherein, the sixth condition includes the following:
the QCL indication information indicates that the first signal is associated with at least two TCI states, and/or
the QCL indication information indicates that the DMRS port of the first signal is associated with at least two TCI states;
wherein, a QCL type included in a TCI state of the at least two TCI states is a first type, and a QCL type included in the TCI state is a third type;
large-scale parameters of channel included in the first type are all delay characteristic parameters;
large-scale parameters of channel included in the third type are all frequency characteristic parameters.

32. The information processing method according to any one of claims 30 to 31, further comprising:
indicating a reference signal corresponding to the QCL type including the large-scale parameter of channel on a frequency property through the TCI state.

33. The information processing method according to claim 23, wherein, indicating QCL type information through the QCL indication information, to indicate whether the transmission scheme of the first signal is the first transmission scheme, comprises:
indicating information that met a seventh condition through the QCL indication information, to indicate that the transmission scheme of the first signal is the first transmission scheme;
wherein, the seventh condition includes:
determining a reference signal that has a QCL relationship with the DMRS port with respect to large-scale parameter of channel on a frequency property according to the first rule; and,
the QCL indication information indicates that the first signal is associated with at least two TCI states, and/or, the QCL indication information indicates that the DMRS port of the first signal is associated with at least two TCI states;
wherein, the at least two TCI states include two TCI states that both satisfy: a QCL type included in each of the two TCI states is of the second type;
the second type includes large-scale parameter of channel on a delay property and large-scale parameter of channel on a frequency property.

34. The information processing method according to claim 33, further comprising:
sending first indication information for indicating a target TCI state;
wherein a reference signal corresponding to a QCL relationship of large-scale parameter of channel on a frequency property included in the target TCI state is used as the reference signal having the QCL relationship with the DMRS port with respect to the large-scale parameter of channel on a frequency property.

35. The information processing method according to claim 21, wherein the sending transmission mode-related configuration information to indicate whether the transmission scheme of the first signal is the first transmission scheme comprises:
instructing the terminal to determine the reference signal having a QCL relationship with the DMRS port with respect to the large-scale parameter of channel on a frequency property according to a first rule through the transmission mode-related configuration information;
the determining the reference signal having a QCL relationship with the DMRS port with respect to the large-scale parameter of channel on a frequency property according to the first rule includes:
determining the target TCI state; using the reference signal corresponding to the QCL type including the large-scale parameter of channel on a frequency property in the target TCI state as a reference signal having a QCL relationship with the DMRS port with respect to the large-scale parameter of channel on a frequency property, the large-scale parameter of channel on a frequency property includes {Doppler shift, Doppler spread}.

36. The information processing method according to claim 21, wherein the sending transmission mode-related configuration information to indicate whether the transmission scheme of the first signal is the first transmission scheme comprises:
instructing the terminal to determine a reference signal having a QCL relationship with the DMRS port with respect to large-scale parameter of channel on a frequency property according to a first rule through the transmission mode-related configuration information;
the determining the reference signal having a QCL relationship with the DMRS port with respect to the large-scale parameter of channel on a frequency property according to the first rule includes: ignoring the following large-scale parameter of channel in the first TCI state: {Doppler shift, Doppler spread}.

37. The information processing method according to claim 21, wherein the DMRS port indication information includes QCL indication information of the DMRS port of the first signal;
the sending transmission mode-related configuration information to indicate whether the transmission scheme of the first signal is the first transmission scheme includes:
indicating information that met an eighth condition through the transmission mode-related configuration information to indicate that the transmission scheme of the first signal is the first transmission scheme;
wherein the eighth condition includes: the scenario indication information indicates that the terminal is in a high-speed train scenario and/or a frequency pre-compensation scenario, and the QCL indication information indicates that the DMRS port of the first signal is associated with at least two TCI states.

38. The information processing method according to any one of claims 21 to 31 and 33 to 37, further comprising:
indicating a reference signal used to determine a transmission frequency of an uplink signal.

39. The information processing method according to any one of claims 21 to 31 and 33 to 37, further comprising:
indicating a reference signal having a QCL relationship with the DMRS port of the first signal with respect to the large-scale parameter of channel on a frequency property.

40. The information processing method according to claim 21, further comprising:
indicating information that met a ninth condition through the transmission mode-related configuration information to indicate that the transmission scheme of the first signal is the third transmission scheme;
wherein the ninth condition includes: a TDRA field of the DCI for scheduling the first signal does not indicate a parameter corresponding to a second transmission scheme;
the transmission mode configuration information is not configured as a value corresponding to the first transmission scheme;
a number of CDM groups where the DMRS port of the first signal is located is 2; and
the first signal is associated with 2 TCI states; and/or the DMRS port of the first signal is associated with 2 TCI states; and/or the third transmission scheme, the second transmission scheme and the first transmission schemes are different from each other.

41. A terminal, including a memory, a transceiver, and a processor, wherein
the memory is used to store computer programs; the transceiver is used to send and receive data under the control of the processor; the processor is used to read the computer programs in the memory and perform the following operations:
receiving transmission mode-related configuration information through the transceiver;
determining whether a transmission scheme of a first signal is a first transmission scheme according to the transmission mode-related configuration information;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

42. The terminal according to claim 41, wherein the determining whether a transmission scheme of a first signal is a first transmission scheme according to the transmission mode-related configuration information includes:
determining a number of a code division multiplexing (CDM) group where the DMRS port of the first signal is located and/or QCL indication information of the DMRS port of the first signal according to the DMRS port indication information;
determining whether the transmission scheme of the first signal is the first transmission scheme according to the number and/or the QCL indication information.

43. The terminal according to claim 42, wherein, the determining whether the transmission scheme of the first signal is the first transmission scheme according to the QCL indication information includes:
determining QCL type information and/or number information of a transmission configuration indication (TCI) state according to the QCL indication information;
determining whether the transmission scheme of the first signal is the first transmission scheme according to the QCL type information and/or the number information of the TCI state.

44. A network device, including a memory, a transceiver, and a processor, wherein
the memory is used to store computer programs; the transceiver is used to send and receive data under the control of the processor; the processor is used to read the computer programs in the memory and perform the following operations:
sending transmission mode-related configuration information through the transceiver to indicate whether a transmission scheme of a first signal is a first transmission scheme;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

45. The network device according to claim 44, wherein the sending transmission mode-related configuration information to indicate whether a transmission scheme of a first signal is a first transmission scheme comprises:
indicating a number of a code division multiplexing (CDM) group where the DMRS port of the first signal is located and/or QCL indication information of the DMRS port of the first signal through the DMRS port indication information, to indicate whether the transmission scheme of the first signal is the first transmission scheme.

46. The network device according to claim 45, wherein, indicating QCL indication information through the DMRS port indication information, to indicate whether the transmission scheme of the first signal is the first transmission scheme, comprises:
indicating QCL type information through the QCL indication information, and/or number information of the transmission configuration indication (TCI) state, to indicate whether the transmission scheme of the first signal is the first transmission scheme.

47. An information processing device, comprising:
a first receiving unit, configured to receive transmission mode-related configuration information;
a first determination unit, configured to determine whether a transmission scheme of a first signal is a first transmission scheme according to the transmission mode-related configuration information;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

48. An information processing device, comprising:
a first sending unit, configured to send transmission mode-related configuration information to indicate whether a transmission scheme of a first signal is a first transmission scheme;
wherein, the transmission mode-related configuration information includes at least one of: transmission mode configuration information, Demodulation Reference signal (DMRS) port indication information of the first signal, time-domain resource allocation (TDRA) indication information about the first signal, or scenario indication information about whether a terminal is in a high-speed train scenario and/or a frequency pre-compensation scenario;
in the first transmission scheme, a layer of the first signal and at least two reference signals have a quasi-co-located (QCL) relationship with respect to at least one large-scale parameter of channel; and/or, a DMRS port of the first signal and at least two reference signals have the QCL relationship with respect to at least one large-scale parameter of channel.

49. A processor-readable storage medium, wherein the processor-readable storage medium stores a computer program, and the computer program is executed by the processor to implement the information processing method according to any one of claims 1 to 20;or the information processing method according to any one of claims 21 to 40.
